(19) **Europäisches Patentamt / European Patent Office / Office européen des brevets**

(11) **EP 3 855 387 B1**

(12) **EUROPEAN PATENT SPECIFICATION**

(45) Date of publication and mention
of the grant of the patent:
**10.09.2025 Bulletin 2025/37**

(21) Application number: **18934093.8**

(22) Date of filing: **18.09.2018**

(51) International Patent Classification (IPC):
**G06T 5/00** (2024.01)    **G06T 5/50** (2006.01)
**G06T 3/40** (2024.01)    **G06T 7/13** (2017.01)
**H04N 5/33** (2023.01)    **G06T 3/4015** (2024.01)
**H04N 23/11** (2023.01)    **H04N 23/84** (2023.01)
**H04N 25/131** (2023.01)    **H04N 9/64** (2023.01)

(52) Cooperative Patent Classification (CPC):
**G06T 3/4015; G06T 5/50; G06T 7/13; H04N 9/646;
H04N 23/11; H04N 23/843; H04N 25/131;**
G06T 2207/10024; G06T 2207/10048;
G06T 2207/20224; H04N 25/135

(86) International application number:
**PCT/CN2018/106066**

(87) International publication number:
**WO 2020/056567 (26.03.2020 Gazette 2020/13)**

(54) **IMAGE PROCESSING METHOD AND APPARATUS, ELECTRONIC DEVICE, AND READABLE STORAGE MEDIUM**

BILDVERARBEITUNGSVERFAHREN UND -VORRICHTUNG, ELEKTRONISCHE VORRICHTUNG UND LESBARES SPEICHERMEDIUM

PROCÉDÉ ET APPAREIL DE TRAITEMENT D'IMAGES, DISPOSITIF ÉLECTRONIQUE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.07.2021 Bulletin 2021/30**

(73) Proprietor: **Zhejiang Uniview Technologies Co., Ltd.**
**Hangzhou, Zhejiang 310000 (CN)**

(72) Inventors:
• **SUN, Yue**
**Hangzhou, Zhejiang 310000 (CN)**

• **FAN, Qingjie**
**Hangzhou, Zhejiang 310000 (CN)**

(74) Representative: **HGF**
**HGF Limited**
**1 City Walk**
**Leeds LS11 9DX (GB)**

(56) References cited:
**EP-A1- 1 992 987          WO-A1-2014/081106
WO-A1-2014/081106          CN-A- 101 309 429
CN-A- 107 705 263          CN-A- 107 705 263
US-A1- 2007 153 335          US-A1- 2016 255 290
US-A1- 2017 374 299          US-B2- 9 530 185**

# EP 3 855 387 B1

## Description

### TECHNICAL FIELD

This application relates to the technical field of image processing, in particular, an image processing method and apparatus, an electronic device, and a readable storage medium.

### BACKGROUND

The conventional color image sensor uses the Bayer format and mainly includes R, G, and B photosensitive units. However, since the R, G, and B photosensitive units sense not only the visible light band information, but also part of the infrared light band information, the color image obtained by directly restoring the original R, G, and B pixel values has a color cast problem. The conventional solution is to add an IR-CUT switching apparatus on the light input path of the sensor. When the camera is running in a color mode, the IR-CUT is switched into an infrared cutoff filter so that infrared light in the environment is prevented from entering the camera and then being collected by the sensor, thereby avoiding the color cast problem of the color image. Since a switchable IR-CUT device needs to be added to the camera, the disadvantage of this method is that in addition to occupying the internal space of the camera and increasing energy consumption, this device also has a hidden danger of switching failure. In this manner, the cost of camera manufacturing and maintenance increases.

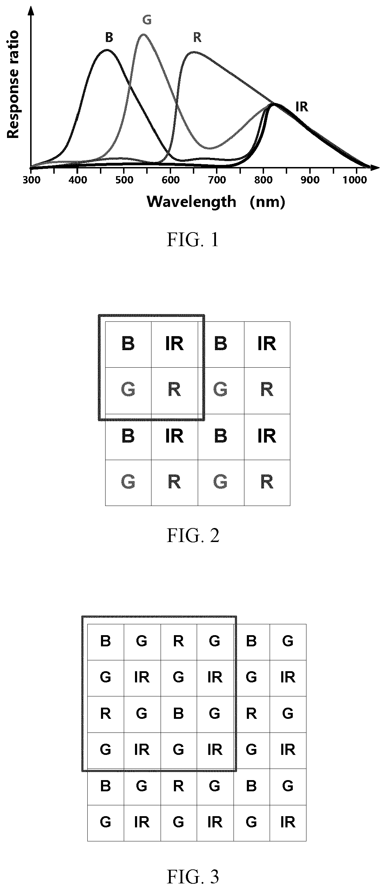

Referring to FIG. 1, based on the conventional RGB color image sensor, part of the color photosensitive units are replaced with an IR photosensitive unit, and the spectral distribution of the IR unit in the infrared band is similar to that of the RGB unit. In this manner, an RGB-IR image sensor is formed. Using the RGB-IR sensor, in conjunction with a specific image interpolation algorithm, the infrared light received by all the color RGB photosensitive units in the sensor array can be calculated, and after the infrared light is removed, the color image without color cast can be restored. Therefore, the RGB-IR sensor becomes an ideal solution to replace the IR-CUT switching apparatus. Further, through a single RGB-IR sensor, the visible light image and the infrared image of the same scenario can be obtained at the same time. In conjunction with specific image algorithm processing, the infrared image information is integrated into the original visible light image so that a color fusion image with higher imaging quality may be obtained. At present, this solution has been applied in some scenarios with harsh visible light imaging such as low-light and haze.

Currently, there are mainly two design schemes for the pixel arrangement of the common RGB-IR image sensor. Referring to FIG. 2, the first solution is that the pixels are arranged based on a 2 × 2 pixel array. Each 2 × 2 pixel array is composed of one R pixel, one G pixel, one B pixel, and one IR pixel, that is, the number ratio of each pixel unit in the sensor array is R : G : B : IR = 1 : 1 : 1 : 1. This design is equivalent to replacing half of the G pixels with IR pixels based on the conventional color Bayer format. Since the definition of the color RGB image is mainly determined by the definition of the G component, the reduction of the G component inevitably leads to a significant decrease in the definition of the color image.

Referring to FIG. 3, the second solution is that the pixels are arranged based on a 4 * 4 pixel array. The number ratio of each pixel unit in this sensor array is R : G : B : IR = 1 : 4 : 1 : 2. This design ensures that the resolution and definition of the G component are basically the same as the resolution and definition of the conventional color Bayer format. Relatively speaking, the second solution is generally better than the first solution in terms of the definition of the color image and the false-color problem caused by the insufficient sampling rate in the high-frequency area. Therefore, the RGB-IR image sensor designed based on the 4 * 4 pixel array has been more and more popularized and applied.

In addition to the design of the sensor, the image interpolation algorithm matching the sensor array is also a key factor in determining the final imaging effect. The interpolation algorithm currently applied to the RGB-IR image sensor designed based on the 4 * 4 pixel array has some shortcomings at least in terms of the image definition, and there is still much room for improvement.

Further relevant technologies are also known from EP 1 992987 A1 which relates to method for acquiring traffic data in a road network and terminal, US 2007/153335 A1 which relates to an image signal processing apparatus, imaging apparatus, image signal processing method and computer program, and US 2016/255290 A1 which relates to a hybrid image correction for dual-aperture camera, and US2017374299A1 which relates to the removal of IR component from the demosaiced R,G,B frames of an input RGBIR image to reconstruct a color corrected RGB Bayer image.

### SUMMARY

Embodiments of this application provide an image processing method and apparatus, an electronic device, and a readable storage medium.

The invention is set out in the appended set of claims.

Embodiments of this application provide an image processing method and apparatus, an electronic device, and a readable storage medium. Based on the edge detection result of the pixels, the IR component image and the RGB

2

component image are sequentially restored and obtained; when the color component is restored, the G component with higher resolution and more complete information is first restored, and then the R and B components are restored so that the restored color image has higher accuracy and image definition.

BRIEF DESCRIPTION OF DRAWINGS

To illustrate solutions in embodiments of this application more clearly, the drawings used in the embodiments will be briefly described below. It is to be understood that the subsequent drawings only illustrate part of embodiments of this application and therefore should not be construed as limiting the scope, and those of ordinary skill in the art may obtain other related drawings based on these drawings on the premise that no creative work is done.

FIG. 1 is a curve diagram of the spectral response characteristic of the photosensitive unit of a conventional RGB-IR sensor;

FIG. 2 is a schematic diagram of an RGB-IR sensor array with a $2 \times 2$ pixel matrix as a constituent unit;

FIG. 3 is a schematic diagram of an RGB-IR sensor array with a $4 \times 4$ pixel matrix as a constituent unit;

FIG. 4 is a structural block diagram of an electronic device according to an embodiment of this application;

FIG. 5 is a flowchart of an image processing method according to an embodiment of this application;

FIG. 6 is a sub-step flowchart of step S510 of FIG. 5;

FIG. 7 is a sub-step flowchart of step S520 of FIG. 5;

FIG. 8 is a schematic diagram of the local pixel layout of the image collected by the RGB-IR sensor array in FIG. 3;

FIGS. 9A to 9C are schematic diagrams of the process of obtaining an IR component image in step S520 according to an embodiment of this application;

FIG. 10 is a sub-step flowchart of step S540 of FIG. 5;

FIG. 11 is a sub-step flowchart of step S550 of FIG. 5;

FIG. 12 is a flowchart of another image processing method according to an embodiment of this application;

FIG. 13 is a function module diagram of an image processing apparatus according to an embodiment of this application; and

FIG. 14 is a function module diagram of another image processing apparatus according to an embodiment of this application.

DETAILED DESCRIPTION

The solutions in embodiments of this application will be described clearly and completely in conjunction with the drawing in embodiments of this application. Apparently, the embodiment described below is part, not all, of embodiments of this application. Generally, the components of embodiments of this application described and illustrated in the drawings herein may be arranged and designed through various configurations.

Therefore, the following detailed description of embodiments of this application shown in the drawings is not intended to limit the protection scope of this application, but merely illustrates the selected embodiments of this application.

It is to be noted that similar reference numerals and letters indicate similar items in the subsequent drawings, and therefore, once a particular item is defined in one drawing, the item needs no more definition and explanation in the subsequent drawings. In the description of this application, the terms "first", "second", etc. are only configured to distinguish the description and are not to be construed as indicating or implying relative importance.

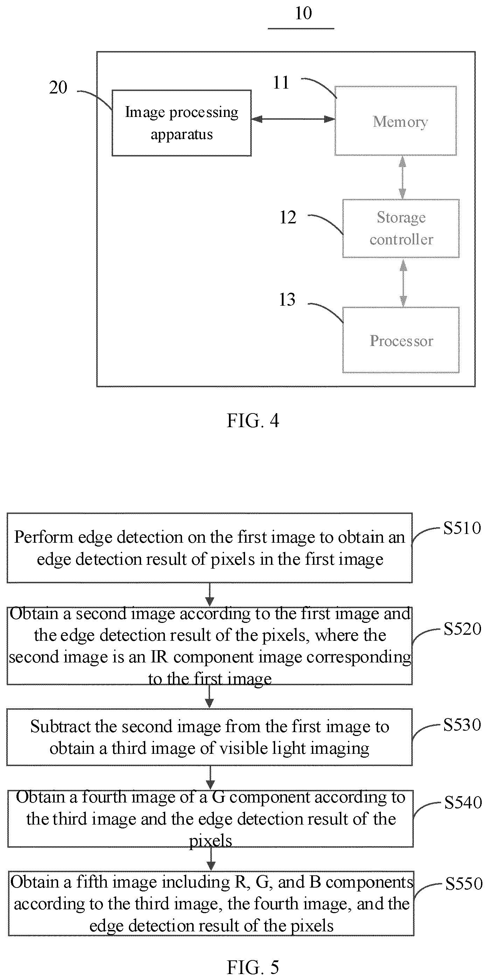

Please refer to FIG. 4, FIG. 4 is a structural block diagram of an electronic device 10 according to an embodiment of this application. The electronic device 10 may be, but is not limited to, a smart phone, a personal computer (PC), a tablet computer, a personal digital assistant (PDA), a mobile Internet device (MID), a server and other terminal equipment with an image processing capability. The electronic device 10 may include an image processing apparatus 20, a memory 11, a storage controller 12, and a processor 13.

The memory 11, the storage controller 12, and the processor 13 are directly or indirectly in electrical connection to each other to implement data transmission or interactions. For example, the electrical connections between the memory 11, the storage controller 12, and the processor 13 may be implemented through one or more communication buses or signal lines. The image processing apparatus 20 is configured to process an image collected by an RGB-IR sensor array with a $4 \times 4$ pixel matrix as a constituent unit. In this embodiment, the RGB-IR sensor array with the $4 \times 4$ pixel matrix as the constituent unit may be part of the electronic device 10, and the image is directly processed after the RGB-IR sensor array obtains the image; or the RGB-IR sensor array with the $4 \times 4$ pixel matrix as the constituent unit is not part of the electronic device 10, and the image processing apparatus 20 processes the image which is collected by the RGB-IR sensor array and input to the electronic device 10. The image processing apparatus 20 may include at least one software function module that may be stored in the memory 11 in the form of software or firmware or fixed in an operating system (OS) of the electronic device 10. The processor 13 is configured to execute an executable module stored in the memory 11, such as software function modules and computer programs included in the image processing apparatus 20.

The memory 11 may be, but is not limited to, a random-access memory (RAM), a read-only memory (ROM), a programmable read-only memory (PROM), an erasable programmable read-only memory (EPROM), an electrically erasable programmable read-only memory (EEPROM) or the like. The memory 11 is configured to store programs, and the processor 13 executes the programs after receiving execution instructions. Accesses of the processor 13 and other components to the memory 11 may be performed under the control of the storage controller 12.

The processor 13 may be an integrated circuit chip with a signal processing capability. The processor 13 may be a general-purpose processor such as a central processing unit (CPU), a network processor (NP), a digital signal processor (DSP), an application-specific integrated circuit (ASIC), a field-programmable gate array (FPGA), or other programmable logic devices, discrete gates or transistor logic devices or discrete hardware components. The processor can implement or perform various methods, steps, and logic block diagrams disclosed in embodiments of the present application. The general-purpose processor may be a microprocessor or any conventional processor.

It is to be understood that the structure shown in FIG. 4 is merely illustrative. The electronic device 10 may further include more or fewer components than the components shown in the figure or may have a configuration different from the configuration shown in FIG. 4. Various components shown in FIG. 4 may be implemented by hardware, software, or a combination thereof.

Please refer to FIG. 5, FIG. 5 is a flowchart of an image processing method applied to the electronic device 10 according to an embodiment of this application. This image processing method is used to process an image collected by an RGB-IR image sensor with a $4 \times 4$ pixel array. The detailed flow of this method is described below.

In step S510, edge detection is performed on the first image so that an edge detection result of the pixels in the first image is obtained.

In this step, the edge detection result of the pixels includes the detection results in four directions, namely, horizontal, vertical, diagonal, and back-diagonal directions. The edge information of all R, G, B, and IR channels of the original RGB-IR image is fully considered, which has better edge detection accuracy than the method in the existing art in which only the edge information of the G channel or the IR channel is used for reference.

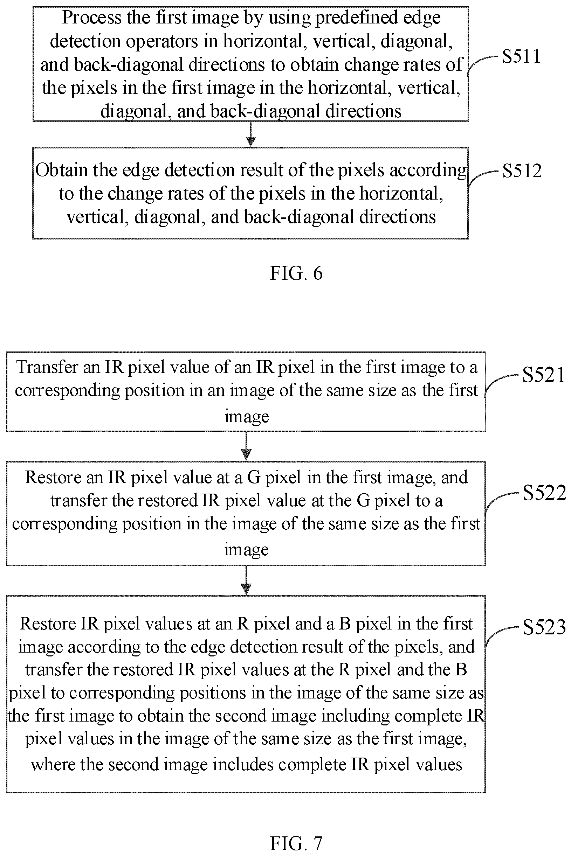

Referring to FIG. 6, in an embodiment, step S510 may be implemented through the sub-steps described below.

In sub-step S511, the first image is processed by using edge detection operators in predefined horizontal, vertical, diagonal, and back-diagonal directions so that change rates of the pixels in the first image in horizontal, vertical, diagonal, and back-diagonal directions are obtained.

In this embodiment, edge detection operators in first, the horizontal, vertical, diagonal, and back-diagonal directions are defined. As shown in equation set (1), $\omega_h$ and $\omega_v$ denote an edge detection operator in a horizontal direction and an edge detection operator in a vertical direction, respectively; $\omega_d$ and $\omega_{bd}$ denote an edge detection operator in a diagonal direction and an edge detection operator in a back-diagonal direction, respectively, and each are a $5 \times 5$ matrice. In the $5 \times 5$ matrice, except for non-zero elements on the diagonal and back-diagonal of the matrix, the other elements are all 0.

$$\omega_h = \begin{bmatrix} -1 & 0 & 2 & 0 & -1 \end{bmatrix}, \quad \omega_v = \begin{bmatrix} -1 & 0 & 2 & 0 & -1 \end{bmatrix}^T,$$

$$\omega_d = \begin{bmatrix} & & & & -1 \\ & & & 0 & \\ & & 2 & & \\ & 0 & & & \\ -1 & & & & \end{bmatrix}, \quad \omega_{bd} = \begin{bmatrix} -1 & & & & \\ & 0 & & & \\ & & 2 & & \\ & & & 0 & \\ & & & & -1 \end{bmatrix} \quad (1)$$

The first image is processed by using the preceding edge detection operators so that the change rates of the pixels (per pixel) in the first image in the horizontal, vertical, diagonal, and back-diagonal directions are obtained. For details, please refer to equation set (2).

$$\begin{aligned} \Delta_h &= abs(I_1 \otimes \omega_h), \\ \Delta_v &= abs(I_1 \otimes \omega_v), \\ \Delta_d &= abs(I_1 \otimes \omega_d), \\ \Delta_{bd} &= abs(I_1 \otimes \omega_{bd}) \end{aligned} \quad (2)$$

$\Delta_h$, $\Delta_v$, $\Delta_d$ and $\Delta_{bd}$ denote the change rates of per pixel in the horizontal, vertical, diagonal, and back-diagonal directions, respectively, $I_1$ denotes the first image, $\otimes$ denotes the convolution operation, and *abs()* denotes the absolute value operation. To take into account the processing of the edge pixels of the image, the image may be expanded first (the number of expanded pixels on each edge is not less than 2). After the preceding convolution operation is completed, the image where change rates of the image are obtained is then reduced and restored to the same resolution as the original image $I_1$.

In step S512, the edge detection result of the pixels is obtained according to the change rates of the pixels in the horizontal, vertical, diagonal, and back-diagonal directions.

First, edge detection results of the pixels in horizontal, vertical, diagonal, and back-diagonal directions are calculated according to the change rates of the pixels in the horizontal, vertical, diagonal, and back-diagonal directions.

The edge detection results are quantified according to the change rates of the pixels in the horizontal, vertical, diagonal, and back-diagonal directions. With reference to equation set (3) and equation set (4), the quantified results of edge detection include two groups: the first group is the edge detection results $E_{h-v}$ in the horizontal and vertical directions; the second group is the quantified results $E_{d-bd}$ in the diagonal and back-diagonal directions. $E_{h-v}$ and $E_{d-bd}$ are described below.

$$E_{h-v} = \begin{cases} 0, & \Delta_h > \alpha_1 \cdot \Delta_v \\ 1, & \Delta_v > \alpha_1 \cdot \Delta_h \\ 0.5, & others. \end{cases} \quad (3)$$

$$E_{d-bd} = \begin{cases} 0, & \Delta_d > \alpha_2 \cdot \Delta_{bd} \\ 1, & \Delta_{bd} > \alpha_2 \cdot \Delta_d \\ 0.5, & others. \end{cases} \quad (4)$$

The parameters α1 and α2 may be adjusted according to the actual image effect so that the best edge detection accuracy can be achieved.

Then, smooth filtering processing is performed on the calculated edge detection results so that the edge detection result of the pixels is obtained.

Smooth filtering processing is performed on the two sets of edge detection results obtained above. The smooth filtering processing may use a simple linear filter (such as a mean filter and a Gaussian filter) or a non-linear filter with an edge retention capability (such as Guided filtering and bilateral filtering). After the smooth filtering processing, on the one hand, the influence of random signals such as noise on the edge detection accuracy is avoided, and on the other hand, the edge information of neighborhood pixels may be referred to each other through smooth processing, so as to achieve the effective use of the edge information of the full components (R, G, B, and IR).

In step S520, a second image is obtained according to the first image and the edge detection result of the pixels. The second image is an IR component image corresponding to the first image.

There is a problem of inconsistency of grayscale characteristics between the pure infrared image and the visible light image. If the RGB pixel value is introduced in the interpolation process of the IR channel, the problem of false signals existing at the edges and details may be caused. Therefore, during restoring the infrared pixel value, on the one hand, the preceding edge detection results are needed for reference, and on the other hand, it needs to be ensured that the RGB pixel value can not be used in the interpolation process of the IR channel. Similarly, the IR pixel value can not be used in the interpolation process of the RGB channel.

Referring to FIG. 7, step S520 includes the sub-steps described below.

In sub-step S521, an IR pixel value of an IR pixel in the first image is transferred to a corresponding position in an image of the same size as this first image.

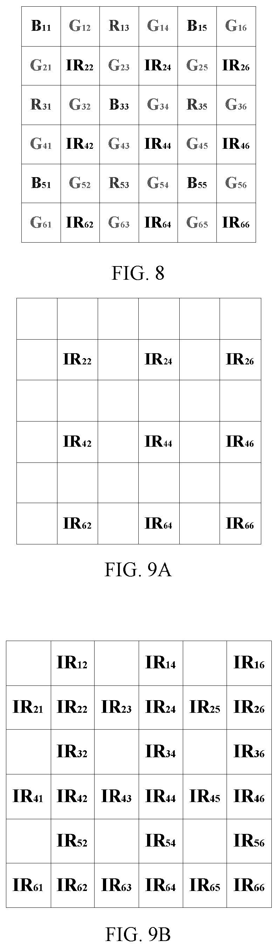

Referring to FIG. 8, first, the IR pixel value at the IR pixel in the image shown in FIG. 8 is transferred to the corresponding position in the image of the same size as this first image so that the image shown in FIG. 9A is obtained.

In sub-step S522, an IR pixel value at a G pixel in the first image is restored, and the restored IR pixel value at the G pixel is transferred to a corresponding position in the image of the same size as the first image.

With continued reference to FIG. 8, there are two cases for the relative positions of the G pixel and the IR pixel: the first case is like a $G_{23}$ pixel, and the left and right sides of the $G_{23}$ pixel are adjacent to one IR pixel; the second case is like a $G_{32}$ pixel, the upper and lower sides of the $G_{32}$ pixel are adjacent to one IR pixel. Any of the other positions of the G pixel and the IR pixel is necessarily one of the preceding two cases. Therefore, the IR pixel value at the G pixel is interpolated in the preceding two cases.

In the case where the G pixel to be interpolated is adjacent to the IR pixel in the horizontal direction, the IR interpolation result at this position is the average value of the pixel values of two IR pixels that are horizontally adjacent to the G pixel to be interpolated. For example, the $G_{23}$ pixel in FIG. 8 is used as an example, and then the IR interpolation result at the $G_{23}$ pixel position is: $IR_{23} = (IR_{22} + IR_{24}) / 2$.

In the case where the G pixel to be interpolated is adjacent to the IR pixel in the vertical direction, the IR interpolation result at this position is the average value of the pixel values of two IR pixels that are vertically adjacent to the G pixel to be interpolated. For example, the $G_{32}$ pixel in FIG. 8 is used as an example, and then the IR interpolation result at the $G_{32}$ pixel position is: $IR_{32} = (IR_{22} + IR_{42}) / 2$.

The restored IR pixel value at the G pixel is transferred to FIG. 9A so that the image shown in FIG. 9B is obtained.

In sub-step S523, IR pixel values at an R pixel and a B pixel in the first image are restored according to the edge detection result of the pixels, and the restored IR pixel values at the R pixel and the B pixel are transferred to corresponding positions in the image of the same size as this first image so that the second image including complete IR pixel values is obtained in the image of the same size as this first image.

The IR pixel values at all R and B pixel in the first image are restored. As shown in FIG. 8, for all R or B pixels in the first image, the pixels at the four diagonally adjacent positions of all R or B pixels are IR pixels. The IR interpolation result at the R or B pixel is calculated by using the edge detection results and in conjunction with the four neighborhood IR pixel values. The $B_{33}$ pixel in FIG. 8 is used as an example. The pixels at four diagonally adjacent positions of the $B_{33}$ are $IR_{22}$, $IR_{24}$, $IR_{42}$, and $IR_{44}$, respectively. The value of the diagonal edge detection result at the $B_{33}$ pixel is $E_{d-bd}(B_{33})$, and then the IR interpolation result at the $B_{33}$ pixel is described below.

$$IR_{33} = \begin{cases} (IR_{22} + IR_{44}) / 2, & E_{d-bd}(B_{33}) < T_1 \\ (IR_{24} + IR_{42}) / 2, & E_{d-bd}(B_{33}) > 1 - T_1 \\ (IR_{22} + IR_{44} + IR_{24} + IR_{42}) / 4, & others. \end{cases} \qquad (5)$$

The threshold parameter $T_1$ may take a value range of [0, 0.5]. The greater the value of the threshold parameter is, the sharpness of the interpolation result is, but the more obvious the noise is. Therefore, it is necessary to select an appropriate threshold $T_1$ according to the actual image effect to take into account the noise and definition of the image.

$E_{d-bd}(B_{33})$ denotes the relative size relationship of the change rates of the $B_{33}$ pixel in the diagonal and back-diagonal directions. In the case where the $E_{d-bd}(B_{33})$ is smaller (the $E_{d-bd}(B_{33})$ is closer to 0), it indicates that the change rate of the $B_{33}$ pixel in the diagonal direction is greater than the change rate of the $B_{33}$ pixel in the back-diagonal direction, that is, the probability that the edge direction of the $B_{33}$ pixel is along the back-diagonal direction is greater, so the interpolation direction is along the back-diagonal direction; on the contrary, in the case where $E_{d-bd}(B_{33})$ is greater ($E_{d-bd}(B_{33})$ is closer to 1), it indicates that the probability that the edge direction of the $B_{33}$ pixel is along the diagonal direction is greater, so the interpolation direction is along the diagonal direction.

Through the preceding interpolation direction design, it can be ensured to the maximum extent that the interpolation direction is along the edge direction, thereby avoiding problems such as edge blur and image distortion caused by the interpolation operation.

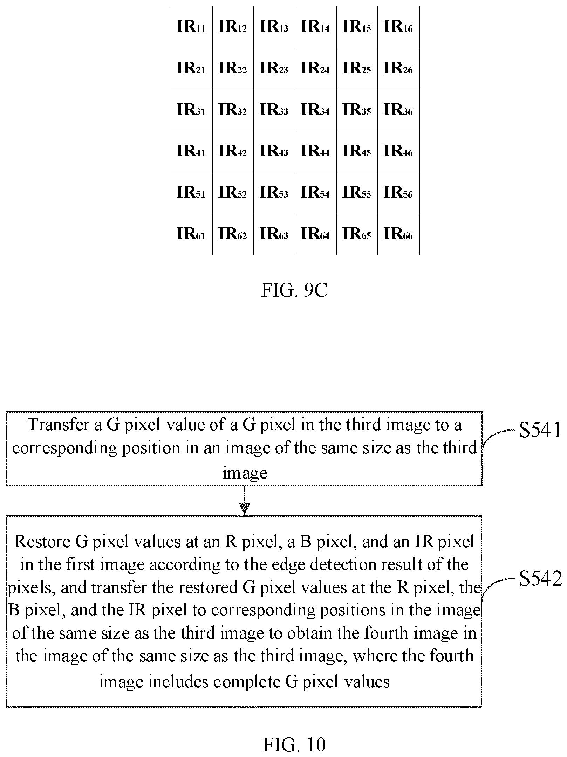

The restored IR pixel values at all R and B pixel in the first image are transferred to the corresponding positions in FIG. 9B so that FIG. 9C is obtained. FIG. 9C is the second image including complete IR pixel values.

In step S530, the second image is subtracted from the first image so that a third image of visible light imaging is obtained.

After the IR component image (the second image) is subtracted from the first image, the third image of visible light imaging can be obtained.

In step S540, a fourth image of a G component is obtained according to the third image and the edge detection result of the pixels.

Referring to FIG. 10, in an embodiment, step S540 may be implemented through the sub-steps described below.

In sub-step S541, a G pixel value of a G pixel in the third image is transferred to a corresponding position in an image of the same size as this third image.

In sub-step S542, G pixel values at an R pixel, a B pixel, and an IR pixel in the first image are restored according to the edge detection result of the pixels, and the restored G pixel values at the R pixel, the B pixel, and the IR pixel are transferred to corresponding positions in the image of the same size as this third image so that the fourth image including complete G pixel values is obtained in the image of the same size as this third image.

With continued reference to FIG. 8, the four neighborhoods (pixels adjacent to the upper, lower, left, and right of the target pixel) of all R, B, and IR pixels in the image each are a G pixel. In conjunction with edge detection and four neighborhood G pixel values, the G pixel values at all R, B, and IR pixel can be obtained. The $B_{33}$ pixel in FIG. 8 is used as an example. The four neighborhood G pixel values of the $B_{33}$ pixel are $G_{32}$, $G_{23}$, $G_{34}$, and $G_{43}$, respectively. The value of the horizontal-vertical edge detection result at the $B_{33}$ pixel is $E_{h\text{-}v}(B_{33})$, and then the G interpolation result at the $B_{33}$ pixel is described below.

$$G_{33} = \begin{cases} (G_{23} + G_{43}) / 2, & E_{h-v}(B_{33}) < T_2 \\ (G_{32} + G_{34}) / 2, & E_{h-v}(B_{33}) > 1 - T_2 \\ (G_{23} + G_{43} + G_{32} + G_{34}) / 4, & others. \end{cases} \qquad (6)$$

The selection of the threshold parameter $T_2$ may refer to the selection manner of the threshold $T_1$ in equation (5). According to the same interpolation rule as equation (5), the G pixel values at all R, B, and IR pixel can be restored.

After the preceding sub-step S541 and sub-step S542 are completed, the fourth image of the complete G component can be obtained.

In step S550, a fifth image including R, G, and B components is obtained according to the third image, the fourth image, and the edge detection result of the pixels.

According to the third image, the fourth image, the edge detection result of the pixels, and the color difference constant method, the complete R and B channel images can be restored, and in conjunction with the restored G color channel image in the fourth image, a complete RGB image, that is, the fifth image can be obtained. In this embodiment, the complete R and B channel images may also be restored by using the color ratio constant method, and in conjunction with the restored G color channel image in the fourth image, a complete RGB image is obtained.

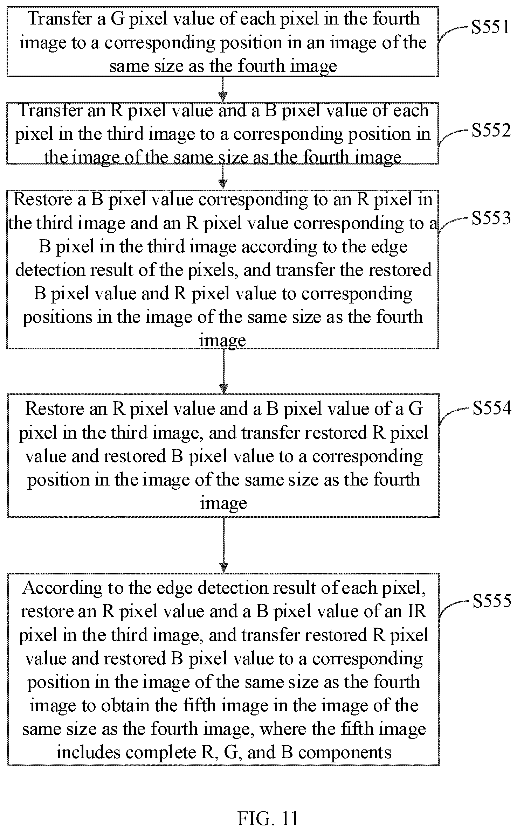

Referring to FIG. 11, in an embodiment, step S550 may be implemented through the sub-steps described below.

In sub-step S551, a G pixel value of each pixel in the fourth image is transferred to a corresponding position in an image of the same size as this fourth image.

In sub-step S552, an R pixel value and a B pixel value of each pixel in the third image are transferred to a corresponding position in the image of the same size as this fourth image.

In sub-step S553, a B pixel value at an R pixel in the third image and an R pixel value at a B pixel in the third image are restored according to the edge detection result of the pixels, and the restored B pixel value and R pixel value are transferred to corresponding positions in the image of the same size as this fourth image.

The B pixel values at all R pixel in the third image and the R pixel values at all B pixel in the third image are restored and transferred to the corresponding positions in the image of the same size as this fourth image. The method of restoring the B pixel values at the R pixel is consistent with the method of restoring the R pixel values at the B pixel, which is achieved by combining edge detection and the color difference constant method. The $B_{33}$ pixel in FIG. 8 is used as an example. The value of the horizontal-vertical edge detection result at the $B_{33}$ pixel is $E_{h\text{-}v}(B_{33})$, and then the R interpolation result at the $B_{33}$ pixel is described below.

$$R_{33} = \begin{cases} (R_{13} + R_{53}) / 2 + (2G_{33} - G_{13} - G_{53}) / 2, & E_{h-v}(B_{33}) < T_3 \\ (R_{31} + R_{35}) / 2 + (2G_{33} - G_{31} - G_{35}) / 2, & E_{h-v}(B_{33}) > 1 - T_3 \\ (R_{13} + R_{53} + R_{31} + R_{35}) / 4 + (4G_{33} - G_{13} - G_{53} - G_{31} - G_{35}) / 4, & others \end{cases} \quad (7)$$

The selection of the threshold parameter $T_3$ may refer to the selection manner of the threshold $T_1$ in equation (5). The B pixel value at the R pixel may be restored by using the same interpolation rule, which will not be repeated herein.

In sub-step S554, an R pixel value and a B pixel value of a G pixel in the third image are restored and transferred to a corresponding position in the image of the same size as this fourth image.

With continued reference to FIG. 8, there are two cases for the position of the G pixel relative to the R and B pixels: the first case is like a $G_{32}$ pixel, and the $G_{32}$ pixel is adjacent to the R and B pixels in the horizontal direction; the second case is like a $G_{23}$ pixel, and the $G_{23}$ pixel is adjacent to the R and B pixels in the vertical direction. Any of the other positions of the G pixel relative to the R and B pixels is necessarily one of the preceding two cases. Therefore, the R and B pixel values at the G pixel are restored in the preceding two cases.

In the case where the G pixel to be interpolated is adjacent to the R and B pixels in the horizontal direction, the R (or B) pixel value interpolation result at this G pixel is obtained according to the horizontally adjacent R (or B) and the G pixel value and in conjunction with the color difference constant method. For example, the $G_{32}$ pixel in FIG. 8 is used as an example, and then the R and B pixel value interpolation results at this G pixel are described below.

$$\begin{aligned} R_{32} &= (R_{31} + R_{33}) / 2 + (2G_{32} - G_{31} - G_{33}) / 2, \\ B_{32} &= (B_{31} + B_{33}) / 2 + (2G_{32} - G_{31} - G_{33}) / 2. \end{aligned} \quad (8)$$

In the case where the to-be-interpolated G pixel is adjacent to the R and B pixels in the vertical direction, the R (or B) pixel value interpolation result at this position is obtained according to the vertically adjacent R (or B) and the G pixel value and in conjunction with the color difference constant method. For example, the $G_{23}$ pixel in FIG. 8 is used as an example, and then the R and B pixel value interpolation results at this position are described below.

$$\begin{aligned} R_{23} &= (R_{13} + R_{33}) / 2 + (2G_{23} - G_{13} - G_{33}) / 2, \\ B_{23} &= (B_{13} + B_{33}) / 2 + (2G_{23} - G_{13} - G_{33}) / 2. \end{aligned} \quad (9)$$

In sub-step S555, according to the edge detection result of the pixels, an R pixel value and a B pixel value of an IR pixel in the third image are restored and transferred to corresponding positions in the image of the same size as this fourth image so that the fifth image including complete R, G, and B components is obtained in the image of the same size as this fourth image.

An R pixel value and a B pixel value at all IR pixel in the third image are restored and transferred to corresponding positions in the image of the same size as this fourth image. In this case, for any IR pixel in the image, the R and B pixel values in the four neighborhoods of this IR pixel are restored. Therefore, the R and B pixel values at this IR pixel can be restored through edge detection and the color difference constant method. The $IR_{22}$ pixel in FIG. 8 is used as an example. The value of the horizontal-vertical edge detection result at this $IR_{22}$ pixel is $E_{h-v}(IR_{22})$, and then the R and B pixel value interpolation results at this $IR_{22}$ pixel are described below.

$$R_{22} = \begin{cases} (R_{12} + R_{32}) / 2 + (2G_{22} - G_{12} - G_{32}) / 2, & E_{h-v}(IR_{22}) < T_4 \\ (R_{21} + R_{23}) / 2 + (2G_{22} - G_{21} - G_{23}) / 2, & E_{h-v}(IR_{22}) > 1 - T_4 \\ (R_{12} + R_{32} + R_{21} + R_{23}) / 4 + (4G_{22} - G_{12} - G_{32} - G_{21} - G_{23}) / 4, & others \end{cases}$$

$$B_{22} = \begin{cases} (B_{12} + B_{32}) / 2 + (2G_{22} - G_{12} - G_{32}) / 2, & E_{h-v}(IR_{22}) < T_4 \\ (B_{21} + B_{23}) / 2 + (2G_{22} - G_{21} - G_{23}) / 2, & E_{h-v}(IR_{22}) > 1 - T_4 \\ (B_{12} + B_{32} + B_{21} + B_{23}) / 4 + (4G_{22} - G_{12} - G_{32} - G_{21} - G_{23}) / 4, & others \end{cases} \quad (10)$$

The selection of the threshold parameter $T_4$ may refer to the selection manner of the threshold $T_1$ in equation (5).

After the preceding steps, an RGB image including R, G, and B components, that is, the fifth image can be obtained.

The preceding method provides an image collected by an RGB-IR image sensor designed based on a 4 × 4 pixel array. Through a full-component edge detection method and in conjunction with an improved RGB channel interpolation process, the preceding method has better interpolation accuracy and image restoration effect than the existing similar algorithm.

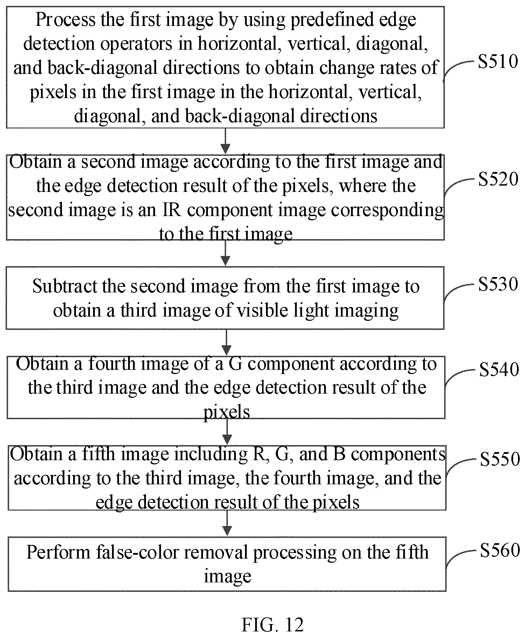

Referring to FIG. 12, in an embodiment of this application, the method may further include step S560.

In step S560, false-color removal processing is performed on the fifth image.

In this embodiment, step S560 may be implemented in the manner described below.

First, the fifth image is converted into a color space in which brightness and chroma are separated so that a sixth image is obtained. The color space in which brightness and chroma are separated may be one of the color spaces in which brightness and chroma are separated and with the standard definition such as YUV, YIQ, Lab, HSL, and HSV, or may be a customized color space in which the brightness component and the chroma component are expressed separately.

Next, a chroma component is analyzed so that a target processing area is determined.

The local detail and chroma information of the image is analyzed so that the local area where false colors may appear is determined for positioning and screening, and the target processing area is determined.

Then, the chroma component of the target processing area is attenuated.

Finally, gamut conversion is performed in conjunction with the original brightness component and the attenuated chroma component so that an RGB image after the false-color removal processing is obtained.

An embodiment of this application further provides an image processing apparatus 20. It may be understood that the specific functions performed by various hardware components involved in the image processing apparatus 20 to be described next have been described in the specific steps of the preceding embodiments, and the detailed functions corresponding to the various hardware components can be referred to the description of the preceding embodiments. Only a brief description of the image processing apparatus 20 is given below.

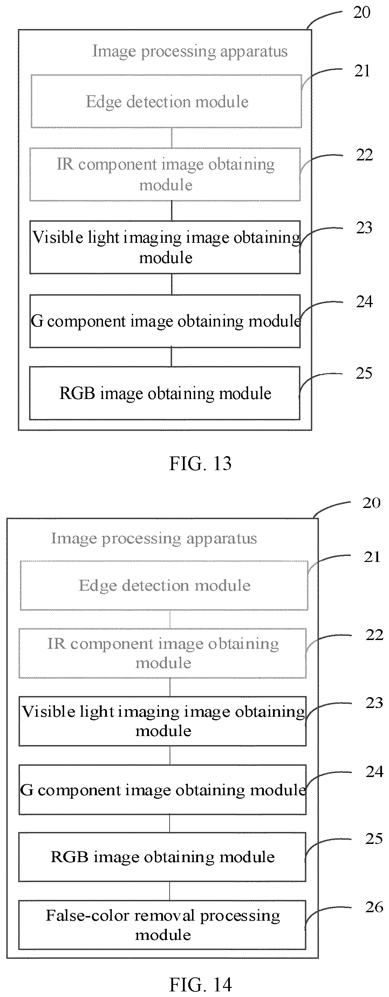

Referring to FIG. 13, the image processing apparatus 20 includes an edge detection module 21, an IR component image obtaining module 22, a visible light imaging image obtaining module 23, a G component image obtaining module 24, and an RGB image obtaining module 25.

The edge detection module 21 is configured to perform edge detection on the first image to obtain an edge detection result of the pixels in the first image.

The IR component image obtaining module 22 is configured to obtain a second image according to the first image and the edge detection result of the pixels. The second image is an IR component image corresponding to the first image.

The visible light imaging image obtaining module 23 is configured to subtract the second image from the first image to obtain a third image of visible light imaging.

The G component image obtaining module 24 is configured to obtain a fourth image of a G component according to the third image and the edge detection result of the pixels.

The RGB image obtaining module 25 is configured to obtain a fifth image including R, G, and B components according to the third image, the fourth image, and the edge detection result of the pixels.

In this embodiment, the edge detection module 21 is configured to process the first image by using predefined edge detection operators in horizontal, vertical, diagonal, and back-diagonal direction so that change rates of the pixels in the first image in the horizontal, vertical, diagonal, and back-diagonal directions are obtained.

The edge detection module 21 is configured to obtain the edge detection result of the pixels according to the change rates of the pixels in the horizontal, vertical, diagonal, and back-diagonal directions.

In this embodiment, the IR component image obtaining module 22 is configured to transfer an IR pixel value of an IR pixel in the first image to a corresponding position in an image of the same size as this first image.

The IR component image obtaining module 22 is configured to restore an IR pixel value at a G pixel in the first image, and transfer the restored IR pixel value at the G pixel to a corresponding position in the image of the same size as this first image.

The IR component image obtaining module 22 is configured to restore IR pixel values at an R pixel and a B pixel in the first image according to the edge detection result of the pixels, and transfer the restored IR pixel values at the R pixel and the B pixel to corresponding positions in the image of the same size as this first image so that the second image including complete IR pixel values is obtained in the image of the same size as this first image.

In this embodiment, the G component image obtaining module 24 is configured to transfer a G pixel value of a G pixel in the third image to a corresponding position in an image of the same size as this third image.

The G component image obtaining module 24 is configured to restore G pixel values at an R pixel, a B pixel, and an IR pixel in the first image according to the edge detection result of the pixels, and transfer the restored G pixel values at the R pixel, the B pixel, and the IR pixel to corresponding positions in the image of the same size as this third image so that the fourth image including complete G pixel values is obtained in the image of the same size as this third image.

In this embodiment, the RGB image obtaining module 25 is configured to transfer a G pixel value of each pixel in the fourth image to a corresponding position in an image of the same size as this fourth image.

The RGB image obtaining module 25 is configured to transfer an R pixel value and a B pixel value of each pixel in the third image to a corresponding position in the image of the same size as this fourth image.

The RGB image obtaining module 25 is configured to restore a B pixel value at an R pixel in the third image and an R pixel value at a B pixel in the third image according to the edge detection result of the pixels, and transfer the restored B pixel value and restored R pixel value to corresponding positions in the image of the same size as this fourth image.

The RGB image obtaining module 25 is configured to restore an R pixel value and a B pixel value of a G pixel in the third image, and transferred the restored R pixel value and the restored B pixel value to a corresponding position in the image of the same size as this fourth image.

The RGB image obtaining module 25 is configured to restore an R pixel value and a B pixel value of an IR pixel in the third image according to the edge detection result of the pixels, and transfer the restored R pixel value and the restored B pixel value to a corresponding position in the image of the same size as this fourth image so that the fifth image including complete R, G, and B components is obtained in the image of the same size as this fourth image.

Referring to FIG. 14, the image processing apparatus 20 further includes a false-color removal processing module 26.

The false-color removal processing module 26 performs false-color removal processing on the fifth image.

The false-color removal processing module 26 is configured to convert the fifth image into a color space in which brightness and chroma are separated.

The false-color removal processing module 26 is configured to analyze a chroma component so that a target processing area is determined.

The false-color removal processing module 26 is configured to attenuate the chroma component of the target processing area.

The false-color removal processing module 26 is configured to perform gamut conversion between a brightness component and the attenuated chroma component so that an RGB image after the false-color removal processing is obtained.

The functional modules may be stored in a computer-readable storage medium if implemented in the form of software function modules and sold or used as independent products. Based on this understanding, the solutions of this application substantially, or the part contributing to the existing art, or part of the solutions may be embodied in the form of a software product. The computer software product is stored in a storage medium and includes multip;e instructions for enabling corresponding devices to perform all or part of the steps of the method according to embodiments of this application. The preceding storage medium includes a USB flash disk, a mobile hard disk, a read-only memory (ROM), a random-access memory (RAM), a magnetic disk, an optical disk, or another medium capable of storing program codes.

To sum up, embodiments of this application provide an image processing method and apparatus, an electronic device, and a readable storage medium. Based on the edge detection result of the pixels, the IR component image and the RGB component image are sequentially restored and obtained; when the color component is restored, the G component with higher resolution and more complete information is first restored, and then the R and B components are restored so that the restored color image has higher accuracy and image definition. Meanwhile, the false-color removal processing is performed on the obtained RGB image so that the high-frequency false-color problem in the image can be effectively controlled and improved.

The above are only preferred embodiments of this application.

INDUSTRIAL APPLICABILITY

The image processing method and apparatus, the electronic device, and the readable storage medium provided in embodiments of this application can enable the restored color image to have higher accuracy and image definition, and can effectively control and improve the high-frequency false-color problem in the image.

**Claims**

1. A computer-implemented image processing method for processing a first image collected by an RGB-IR image sensor, wherein the RGB-IR image sensor comprises a $4 \times 4$ pixel array, a spectral distribution of an IR unit of the RGB-IR image sensor in an infrared band is similar to a spectral distribution of the RGB unit of the RGB-IR image sensor in the infrared band, **characterized in that**, the method comprises:

performing edge detection on the first image (S510) by using all R, G, B, IR components of the first image to obtain an edge detection result of pixels in the first image, wherein the edge detection result of pixels in the first image comprises a diagonal-backdiagonal edge detection result of the pixels and a horizontal-vertical edge detection result of the pixels;

obtaining a second image according to the first image and the edge detection result of the pixels (S520), wherein the second image is an IR component image comprising complete IR pixel values corresponding to the first image and having the same size as the first image;

subtracting the second image from the first image (S530) to obtain a third image of visible light imaging;

obtaining a fourth image of a G component according to the third image and the edge detection result of the pixels (S540); and

obtaining a fifth image comprising R, G, and B components according to the third image, the fourth image, and the edge detection result of the pixels (S550);

wherein the obtaining the fifth image comprising the R, G, and B components according to the third image, the fourth image, and the edge detection result of the pixels comprises:

transferring a G pixel value of each pixel in the fourth image to a corresponding position in an image of the same size as the fourth image (S551);

transferring an R pixel value and a B pixel value of each pixel in the third image to a corresponding position in the image of the same size as the fourth image (S552);

restoring a B pixel value at an R pixel in the third image and an R pixel value at a B pixel in the third image (S553) according to the edge detection result of the pixels, and transferring each of the restored B pixel value and the restored R pixel value to corresponding positions in the image of the same size as the fourth image;

restoring an R pixel value and a B pixel value at a G pixel in the third image (S554), and transferring the restored R pixel value and the restored B pixel value to a corresponding position in the image of the same size as the fourth image; and

restoring an R pixel value and a B pixel value at an IR pixel in the third image according to the edge detection result of the pixels (S555), and transferring each of the restored R pixel value and the restored B pixel value to a corresponding position in the image of the same size as the fourth image to obtain the fifth image in the image of the same size as the fourth image, wherein the fifth image comprises complete R, G, and B components;

wherein the obtaining the second image according to the first image and the edge detection result of the pixels comprises:

transferring an IR pixel value of an IR pixel in the first image to a corresponding position in an image of the same size as the first image (S521);

restoring an IR pixel value at a G pixel in the first image according to IR pixels adjacent to the G pixels in the first image, and transferring the restored IR pixel value at the G pixel to a corresponding position in the image of the same size as the first image (S522); and

restoring IR pixel values at an R pixel and a B pixel in the first image according to the edge detection result of the pixels and IR pixels respectively adjacent to the R pixel and the B pixel in the first image, and transferring the restored IR pixel values at the R pixel and the B pixel to corresponding positions in the image of the same size as the first image to obtain the second image in the image of the same size as the first image (S523);

wherein the restoring the IR pixel values at the R pixel and the B pixel in the first image according to the edge detection result of the pixels and IR pixels respectively adjacent to the R pixel and the B pixel in the first image comprises:

restoring the IR pixel values at the B pixel in the first image according to the edge detection result of the pixels through the following formula:

$$
IR(B)_{ij} = \begin{cases} (IR(B)_{(i-1)(j-1)} + IR(B)_{(i+1)(j+1)}) \, / \, 2, & E_{d-bd}(B_{ij}) < T_1 \\ (IR(B)_{(i-1)(j+1)} + IR(B)_{(i+1)(j-1)}) \, / \, 2, & E_{d-bd}(B_{ij}) > 1 - T_1 \\ (IR(B)_{(i-1)(j-1)} + IR(B)_{(i+1)(j+1)} + IR(B)_{(i-1)(j+1)} + IR(B)_{(i+1)(j-1)}) \, / \, 4, & others; \end{cases}
$$

wherein $IR(B)_{ij}$ is an IR pixel value at the B pixel in the i-th row and the j-th column in the first image, $B_{ij}$ is a B pixel in the i-th row and the j-th column in the first image, $E_{d-bd}(B_{ij})$ is a value of the diagonal edge detection result at the $B_{ij}$, $T_1$ is a first preset threshold parameter; and

restoring the IR pixel values at the R pixel in the first image according to the edge detection result of the pixels through the following formula:

$$IR(R)_{ij} = \begin{cases} (IR(R)_{(i-1)(j-1)} + IR(R)_{(i+1)(j+1)}) / 2, & E_{d-bd}(R_{ij}) < T_2 \\ (IR(R)_{(i-1)(j+1)} + IR(R)_{(i+1)(j-1)}) / 2, & E_{d-bd}(R_{ij}) > 1 - T_2 \\ (IR(R)_{(i-1)(j-1)} + IR(R)_{(i+1)(j+1)} + IR(R)_{(i-1)(j+1)} + IR(R)_{(i+1)(j-1)}) / 4, & others; \end{cases}$$

wherein $IR(R)_{ij}$ is an IR pixel value at the R pixel in the i-th row and the j-th column in the first image, $R_{ij}$ is a R pixel in the i-th row and the j-th column in the first image, $E_{d-bd}(R_{ij})$ is a value of the diagonal edge detection result at the $R_{ij}$, $T_2$ is a second preset threshold parameter;

wherein the obtaining the fourth image of a G component according to the third image and the edge detection result of the pixels comprises:

transferring a G pixel value of a G pixel in the third image to a corresponding position in an image of the same size as the third image (S541); and

restoring G pixel values at an R pixel, a B pixel, and an IR pixel in the first image according to the edge detection result of the pixels, and transferring the restored G pixel values at the R pixel, the B pixel, and the IR pixel to corresponding positions in the image of the same size as the third image to obtain the fourth image in the image of the same size as the third image, wherein the fourth image comprises complete G pixel values (S542);

wherein the restoring the G pixel values at the R pixel, the B pixel, and the IR pixel in the first image according to the edge detection result of the pixels comprises:

restoring the G pixel values at the R pixel in the first image according to the edge detection result of the pixels through the following formula:

$$G(R)_{ij} = \begin{cases} (G(R)_{(i-1)j} + G(R)_{(i+1)j}) / 2, & E_{h-v}(R_{ij}) < T_3 \\ (G(R)_{i(j-1)} + G(R)_{i(j+1)}) / 2, & E_{h-v}(R_{ij}) > 1 - T_3 \\ (G(R)_{(i-1)j} + G(R)_{(i+1)j} + G(R)_{i(j-1)} + G(R)_{i(j+1)}) / 4, & others; \end{cases}$$

wherein $G(R)_{ij}$ is a G pixel value at the R pixel in the i-th row and the j-th column in the first image, $R_{ij}$ is an R pixel in the i-th row and the j-th column in the first image, $E_{h-v}(R_{ij})$ is a value of the horizontal-vertical edge detection result at the $R_{ij}$, $T_3$ is a third preset threshold parameter;

the G pixel values at the B pixel in the first image is restored according to the edge detection result of the pixels through the following formula:

$$G(B)_{ij} = \begin{cases} (G(B)_{(i-1)j} + G(B)_{(i+1)j}) / 2, & E_{h-v}(B_{ij}) < T_4 \\ (G(B)_{i(j-1)} + G(B)_{i(j+1)}) / 2, & E_{h-v}(B_{ij}) > 1 - T_4 \\ (G(B)_{(i-1)j} + G(B)_{(i+1)j} + G(B)_{i(j-1)} + G(B)_{i(j+1)}) / 4, & others; \end{cases}$$

wherein $G(B)_{ij}$ is a G pixel value at the B pixel in the i-th row and the j-th column in the first image, $B_{ij}$ is a B pixel in the i-th row and the j-th column in the first image, $E_{h-v}(B_{ij})$ is a value of the horizontal-vertical edge detection result at the $B_{ij}$, $T_4$ is a fourth preset threshold parameter; and

the G pixel values at the IR pixel in the first image is restored according to the edge detection result of the pixels through the following formula:

$$G(IR)_{ij} = \begin{cases} (G(IR)_{(i-1)j} + G(IR)_{(i+1)j}) / 2, & E_{h-v}(IR_{ij}) < T_5 \\ (G(IR)_{i(j-1)} + G(IR)_{i(j+1)}) / 2, & E_{h-v}(IR_{ij}) > 1 - T_5 \\ (G(IR)_{(i-1)j} + G(IR)_{(i+1)j} + G(IR)_{i(j-1)} + G_{(j+1)}) / 4, & others; \end{cases}$$

wherein $G(IR)_{ij}$ is a G pixel value at the IR pixel in the i-th row and the j-th column in the first

image, $IR_{ij}$ is an IR pixel in the i-th row and the j-th column in the first image, $E_{h\text{-}v}(IR_{ij})$ is a value of the horizontal-vertical edge detection result at the $B_{ij}$ , $T_5$ is a fifth preset threshold parameter;

wherein the restoring the B pixel value at the R pixel in the third image and the R pixel value at the B pixel in the third image according to the edge detection result of the pixels comprises:

restoring the B pixel value at the R pixel in the third image according to the edge detection result of the pixels through the following formula:

$$R(B)_{ij} =$$

$$\begin{cases} \dfrac{R(B)_{(i-2)j} + R(B)_{(i+2)j}}{2} + \dfrac{2G(B)_{ij} - G(B)_{(i-2)j} - G(B)_{(i+2)j}}{2} \ , \ E_{h\text{-}v}(B_{ij}) \ < \ T_6 \\[4mm] \dfrac{R(B)_{i(j-2)} + R(B)_{i(j+2)}}{2} + \dfrac{2G(B)_{ij} - G(B)_{i(j-2)} - G(B)_{i(j+2)}}{2} \ , \ E_{h\text{-}v}(B_{ij}) \ > \ 1 - T_6 \\[4mm] \dfrac{R(B)_{(i-2)j} + R(B)_{(i+2)j} + R(B)_{i(j-2)} + R(B)_{i(j+2)}}{4} + \dfrac{4G(B)_{ij} - G(B)_{(i-2)j} - G(B)_{(i+2)j} - G(B)_{i(j-2)} - G(B)_{i(j+2)}}{4} \ , \ others; \end{cases}$$

wherein $R(B)_{ij}$ is an R pixel value at the B pixel in the i-th row and the j-th column in the third image, $G(B)_{ij}$ is a G pixel value at the IR pixel in the i-th row and the j-th column in the first image, $B_{ij}$ is a B pixel in the i-th row and the j-th column in the third image, $E_{h\text{-}v}(B_{ij})$ is a value of the horizontal-vertical edge detection result at the $B_{ij}$ , $T_6$ is a sixth preset threshold parameter; and

restoring the R pixel value at the B pixel in the third image according to the horizontal edge detection result of the pixels through the following formula:

$$B(R)_{ij} =$$

$$\begin{cases} \dfrac{B(R)_{(i-2)j} + B(R)_{(i+2)j}}{2} + \dfrac{2G(R)_{ij} - G(R)_{(i-2)j} - G(R)_{(i+2)j}}{2} \ , \ E_{h\text{-}v}(R_{ij}) \ < \ T_7 \\[4mm] \dfrac{B(R)_{i(j-2)} + B(R)_{i(j+2)}}{2} + \dfrac{2G(R)_{ij} - G(R)_{i(j-2)} - G(R)_{i(j+2)}}{2} \ , \ E_{h\text{-}v}(R_{ij}) \ > \ 1 - T_7 \\[4mm] \dfrac{B(R)_{(i-2)j} + B(R)_{(i+2)j} + B(R)_{i(j-2)} + B(R)_{i(j+2)}}{4} + \dfrac{4G(R)_{ij} - G(R)_{(i-2)j} - G(R)_{(i+2)j} - G(R)_{i(j-2)} - G(R)_{i(j+2)}}{4} \ , \ others; \end{cases}$$

wherein $B(R)_{ij}$ is a B pixel value at the R pixel in the i-th row and the j-th column in the third image, $R_{ij}$ is an R pixel in the i-th row and the j-th column in the third image, $E_{h\text{-}v}(R_{ij})$ is a value of the horizontal-vertical edge detection result at the $R_{ij}$ , $T_7$ is a seventh preset threshold parameter;

wherein the restoring the R pixel value and the B pixel value at the G pixel in the third image comprises:

in a case where the G pixel to be interpolated is adjacent to the R pixels and B pixels in the horizontal direction, restoring the R pixel value at the G pixel in the third image through the following formula:

$$R(G)_{ij} = (R(G)_{i(j-1)} + R(G)_{i(j+1)}) / 2 + (2G_{ij} - G_{(j-1)} - G_{(j+1)}) / 2$$

wherein $R(G)_{ij}$ is an R pixel value at the G pixel in the i-th row and the j-th column in the third image, $G_{ij}$ is a G pixel value at the G pixel in the i-th row and the j-th column in the third image;

in a case where the G pixel to be interpolated is adjacent to the R pixels and B pixels in the horizontal direction, the B pixel value at the G pixel in the third image is restored through the following formula:

$$B(G)_{ij} = (B(G)_{i(j-1)} + B(G)_{i(j+1)}) / 2 + (2G_{ij} - G_{(j-1)} - G_{(j+1)}) / 2$$

wherein $B(G)_{ij}$ is a B pixel value at the G pixel in the i-th row and the j-th column in the third image;

in a case where the G pixel to be interpolated is adjacent to the R pixels and B pixels in the vertical direction, the R pixel value at the G pixel in the third image is restored through the following formula:

$$R(G)_{ij} = (R(G)_{(i-1)j} + R(G)_{(i+1)j}) / 2 + (2G_j - G_{(i-1)j} - G_{(i+1)j}) / 2$$

in a case where the G pixel to be interpolated is adjacent to the R pixels and B pixels in the horizontal direction, the B pixel value at the G pixel in the third image is restored through the following formula:

$$B(G)_{ij} = (B(G)_{(i-1)j} + B(G)_{(i+1)j}) / 2 + (2G_j - G_{(i-1)j} - G_{(i+1)j}) / 2;$$

wherein the restoring the R pixel value and the B pixel value at the IR pixel in the third image according to the edge detection result of the pixels comprises:

restoring the R pixel value at the IR pixel in the third image according to the edge detection result of the pixels through the following formula:

$$R(IR)_{ij} =$$

$$\begin{cases} (R(IR)_{(i-1)j} + R(IR)_{(i+1)j}) / 2 + (2G(IR)_{ij} - G(IR)_{(i-1)j} - G(IR)_{(i+1)j}) / 2, & E_{h-v}(IR_{ij}) < T_8 \\ (R(IR)_{i(j-1)} + R(IR)_{i(j+1)}) / 2 + (2G(IR)_{ij} - G(IR)_{i(j-1)} - G(IR)_{i(j+1)}) / 2, & E_{h-v}(IR_{ij}) > 1 - T_8 \\ \dfrac{R(IR)_{(i-1)j} + R(IR)_{(i+1)j} + R(IR)_{i(j-1)} + R(IR)_{i(j+1)}}{4} + \dfrac{4G(IR)_{ij} - G(IR)_{(i-1)j} - G(IR)_{(i+1)j} - G(IR)_{i(j-1)} - G_{i(j+1)}}{4}, & others; \end{cases}$$

wherein $R(IR)_{ij}$ is an R pixel value at the IR pixel in the i-th row and the j-th column in the third image, $R(IR)_{ij}$ is a G pixel value at the IR pixel in the i-th row and the j-th column in the third image, $R_{ij}$ is a R pixel in the i-th row and the j-th column in the third image, $E_{h-v}(R_{ij})$ is a value of the horizontal-vertical edge detection result at the $R_{ij}$, $T_8$ is a eighth preset threshold parameter; and wherein the B pixel value at the IR pixel in the third image is restored according to the edge detection result of the pixels through the following formula:

$$B(IR)_{ij} =$$

$$\begin{cases} (B(IR)_{(i-1)j} + B(IR)_{(i+1)j}) / 2 + (2G(IR)_{ij} - G(IR)_{(i-1)j} - G(IR)_{(i+1)j}) / 2, & E_{h-v}(IR_{ij}) < T_8 \\ (B(IR)_{i(j-1)} + B(IR)_{i(j+1)}) / 2 + (2G(IR)_{ij} - G(IR)_{i(j-1)} - G(IR)_{i(j+1)}) / 2, & E_{h-v}(IR_{ij}) > 1 - T_8 \\ \dfrac{B(IR)_{(i-1)j} + B(IR)_{(i+1)j} + B(IR)_{i(j-1)} + B(IR)_{i(j+1)}}{4} + \dfrac{4G(IR)_{ij} - G(IR)_{(i-1)j} - G(IR)_{(i+1)j} - G(IR)_{i(j-1)} - G_{i(j+1)}}{4}, & others; \end{cases}$$

wherein $B(IR)_{ij}$ is an B pixel value at the IR pixel in the i-th row and the j-th column in the third image.

2. The computer-implemented method of claim 1, wherein the performing the edge detection on the first image (S510) by using all R, G, B, IR components of the first image to obtain the edge detection result of the pixels in the first image comprises:

processing the first image by using predefined edge detection operators in horizontal, vertical, diagonal, and back-diagonal directions to obtain change rates of the pixels in the first image in the horizontal, vertical, diagonal, and back-diagonal directions (S511); and
obtaining the edge detection result of the pixels according to the change rates of the pixels in the horizontal, vertical, diagonal, and back-diagonal directions (S512).

3. The computer-implemented method of claim 2, wherein the obtaining the edge detection result of the pixels according to the change rates of the pixels in the horizontal, vertical, diagonal, and back-diagonal directions (S512) comprises:

> calculating edge detection results of the pixels in the horizontal, vertical, diagonal, and back-diagonal directions according to the change rates of the pixels in the horizontal, vertical, diagonal, and back-diagonal directions; and performing smooth filtering processing on the calculated edge detection results to obtain the edge detection result of the pixels.

**4.** The computer-implemented method of claims 1 to 3, further comprising performing false-color removal processing on the fifth image (S560), wherein the performing false-color removal processing on the fifth image comprises:

> converting the fifth image into a color space in which brightness and chroma are separated;
> analyzing a chroma component to determine a target processing area;
> attenuating the chroma component of the target processing area; and
> performing gamut conversion between a brightness component and attenuated chroma component to obtain an RGB image after the false-color removal processing.

**5.** An electronic device (10), comprising a processor (13) and a non-volatile memory (11) storing a plurality of computer instructions, wherein the electronic device is configured to, when the plurality of the computer instructions are executed by the processor, perform the image processing method of any one of claims 1 to 4.

**6.** A readable storage medium (11), comprising a computer program, wherein
the computer program is configured to, when the computer program is running, control an electronic device (10) where the readable storage medium is located to perform the image processing method of any one of claims 1 to 4.

## Patentansprüche

**1.** Computerimplementiertes Bildverarbeitungsverfahren zum Verarbeiten eines ersten Bildes, das von einem RGB-IR-Bildsensor erfasst wurde, wobei der RGB-IR-Bildsensor eine 4 x 4-Pixelmatrix umfasst und eine spektrale Verteilung einer IR-Einheit des RGB-IR-Bildsensors im Infrarotbereich einer spektralen Verteilung der RGB-Einheit des RGB-IR-Bildsensors im Infrarotbereich ähnelt, **dadurch gekennzeichnet, dass** das Verfahren Folgendes umfasst:

> Durchführen einer Kantenerkennung des ersten Bildes (S510) unter Verwendung aller R-, G-, B- und IR-Komponenten des ersten Bildes, um ein Kantenerkennungsergebnis der Pixel im ersten Bild zu erhalten, wobei das Kantenerkennungsergebnis der Pixel im ersten Bild ein diagonal-rückdiagonales Kantenerkennungsergebnis der Pixel und ein horizontal-vertikales Kantenerkennungsergebnis der Pixel umfasst;
> Erhalten eines zweiten Bildes gemäß dem ersten Bild und dem Kantenerkennungsergebnis der Pixel (S520), wobei das zweite Bild ein IR-Komponentenbild ist, das vollständige IR-Pixelwerte, die dem ersten Bild entsprechen, umfasst und die gleiche Größe wie das erste Bild hat;
> Subtrahieren des zweiten Bildes vom ersten Bild (S530), um ein drittes Bild der sichtbaren Lichtabbildung zu erhalten;
> Erhalten eines vierten Bildes einer G-Komponente gemäß dem dritten Bild und dem Kantenerkennungsergebnis der Pixel (S540); und
> Erhalten eines fünften Bildes, das R-, G- und B-Komponenten umfasst, gemäß dem dritten Bild, dem vierten Bild und dem Kantenerkennungsergebnis der Pixel (S550);
> wobei das Erhalten des fünften Bildes, das die R-, G- und B-Komponenten umfasst, gemäß dem dritten Bild, dem vierten Bild und dem Kantenerkennungsergebnis der Pixel Folgendes umfasst:

>> Übertragen eines G-Pixelwerts jedes Pixels im vierten Bild an eine entsprechende Position in einem Bild derselben Größe wie das vierte Bild (S551);
>> Übertragen eines R-Pixelwerts und eines B-Pixelwerts jedes Pixels im dritten Bild an eine entsprechende Position in dem Bild derselben Größe wie das vierte Bild (S552);
>> Wiederherstellen eines B-Pixelwerts an einem R-Pixel im dritten Bild und eines R-Pixelwerts an einem B-Pixel im dritten Bild (S553) gemäß dem Kantenerkennungsergebnis der Pixel und Übertragen sowohl des wiederhergestellten B-Pixelwerts als auch des wiederhergestellten R-Pixelwerts an entsprechende Positionen in dem Bild derselben Größe wie das vierte Bild;
>> Wiederherstellen eines R-Pixelwerts und eines B-Pixelwerts an einem G-Pixel im dritten Bild (S554) und Übertragen des wiederhergestellten R-Pixelwerts und des wiederhergestellten B-Pixelwerts an eine entsprechende Position in dem Bild derselben Größe wie das vierte Bild; und

Wiederherstellen eines R-Pixelwerts und eines B-Pixelwerts an einem IR-Pixel im dritten Bild gemäß dem Kantenerkennungsergebnis der Pixel (S555) und Übertragen sowohl des wiederhergestellten R-Pixelwerts als auch des wiederhergestellten B-Pixelwerts an eine entsprechende Position in dem Bild derselben Größe wie das vierte Bild, um das fünfte Bild in dem Bild derselben Größe wie das vierte Bild zu erhalten, wobei das fünfte Bild vollständige R-, G- und B-Komponenten umfasst;

wobei das Erhalten des zweiten Bildes gemäß dem ersten Bild und dem Kantenerkennungsergebnis der Pixel Folgendes umfasst:

Übertragen eines IR-Pixelwerts eines IR-Pixels im ersten Bild an eine entsprechende Position in einem Bild derselben Größe wie das erste Bild (S521);

Wiederherstellen eines IR-Pixelwerts an einem G-Pixel im ersten Bild gemäß den IR-Pixeln, die an die G-Pixel im ersten Bild angrenzen, und Übertragen des wiederhergestellten IR-Pixelwerts am G-Pixel an eine entsprechende Position in dem Bild derselben Größe wie das erste Bild (S522); und

Wiederherstellen von IR-Pixelwerten an einem R-Pixel und einem B-Pixel im ersten Bild gemäß dem Kantenerkennungsergebnis der Pixel und IR-Pixeln, die jeweils an das R-Pixel und das B-Pixel im ersten Bild angrenzen, und Übertragen der wiederhergestellten IR-Pixelwerte am R-Pixel und am B-Pixel an entsprechende Positionen in dem Bild derselben Größe wie das erste Bild, um das zweite Bild in dem Bild derselben Größe wie das erste Bild zu erhalten (S523);

wobei das Wiederherstellen der IR-Pixelwerte am R-Pixel und am B-Pixel im ersten Bild gemäß dem Kantenerkennungsergebnis der Pixel und IR-Pixeln, die jeweils an das R-Pixel und das B-Pixel im ersten Bild angrenzen, Folgendes umfasst:

Wiederherstellen der IR-Pixelwerte am B-Pixel im ersten Bild gemäß dem Kantenerkennungsergebnis der Pixel durch die folgende Formel:

$$
IR(B)_{ij} = \begin{cases} (IR(B)_{(i-1)(j-1)} + IR(B)_{(i+1)(j+1)}) / 2, & E_{d-bd}(B_{ij}) < T_1 \\ (IR(B)_{(i-1)(j+1)} + IR(B)_{(i+1)(j-1)}) / 2, & E_{d-bd}(B_{ij}) > 1 - T_1 \\ (IR(B)_{(i-1)(j-1)} + IR(B)_{(i+1)(j+1)} + IR(B)_{(i-1)(j+1)} + IR(B)_{(i+1)(j-1)}) / 4, & andere; \end{cases}
$$

wobei $IR(B)_{ij}$ ein IR-Pixelwert am B-Pixel in der i-ten Zeile und der j-ten Spalte im ersten Bild, $B_{ij}$ ein B-Pixel in der i-ten Zeile und der j-ten Spalte im ersten Bild, $E_{d-bd}(B_{ij})$ ein Wert des diagonalen Kantenerkennungsergebnisses am $B_{ij}$ und $T_1$ ein erster voreingestellter Schwellenwertparameter ist; und

Wiederherstellen der IR-Pixelwerte am R-Pixel im ersten Bild gemäß dem Kantenerkennungsergebnis der Pixel durch die folgende Formel:

$$
IR(R)_{ij} = \begin{cases} (IR(R)_{(i-1)(j-1)} + IR(R)_{(i+1)(j+1)}) / 2, & E_{d-bd}(R_{ij}) < T_2 \\ (IR(R)_{(i-1)(j+1)} + IR(R)_{(i+1)(j-1)}) / 2, & E_{d-bd}(R_{ij}) > 1 - T_2 \\ (IR(R)_{(i-1)(j-1)} + IR(R)_{(i+1)(j+1)} + IR(R)_{(i-1)(j+1)} + IR(R)_{(i+1)(j-1)}) / 4, & andere; \end{cases}
$$

wobei $IR(R)_{ij}$ ein IR-Pixelwert am R-Pixel in der i-ten Zeile und der j-ten Spalte im ersten Bild, $R_{ij}$ ein R-Pixel in der i-ten Zeile und der j-ten Spalte im ersten Bild, $E_{d-bd}(R_{ij})$ ein Wert des diagonalen Kantenerkennungsergebnisses am $R_{ij}$ und $T_2$ ein zweiter voreingestellter Schwellenwertparameter ist;

wobei das Erhalten des vierten Bildes einer G-Komponente gemäß dem dritten Bild und dem Kantenerkennungsergebnis der Pixel Folgendes umfasst:

Übertragen eines G-Pixelwerts eines G-Pixels im dritten Bild an eine entsprechende Position in einem Bild derselben Größe wie das dritte Bild (S541); und

Wiederherstellen von G-Pixelwerten an einem R-Pixel, einem B-Pixel und einem IR-Pixel im ersten Bild gemäß dem Kantenerkennungsergebnis der Pixel und Übertragen der wiederhergestellten G-Pixelwerte an dem R-Pixel, dem B-Pixel und dem IR-Pixel an entsprechende Positionen in dem Bild derselben Größe wie das dritte Bild, um das vierte Bild in dem Bild derselben Größe wie das dritte Bild zu erhalten, wobei das vierte Bild vollständige G-Pixelwerte umfasst (S542);

wobei das Wiederherstellen der G-Pixelwerte an dem R-Pixel, dem B-Pixel und dem IR-Pixel im ersten Bild gemäß dem Kantenerkennungsergebnis der Pixel Folgendes umfasst:

Wiederherstellen der G-Pixelwerte am R-Pixel im ersten Bild gemäß dem Kantenerkennungsergebnis der Pixel durch die folgende Formel:

$$G(R)_{ij} = \begin{cases} (G(R)_{(i-1)j} + G(R)_{(i+1)j})/2, & E_{h-v}(R_{ij}) < T_3 \\ (G(R)_{i(j-1)} + G(R)_{i(j+1)})/2, & E_{h-v}(R_{ij}) > 1 - T_3 \\ (G(R)_{(i-1)j} + G(R)_{(i+1)j} + G(R)_{i(j-1)} + G(R)_{i(j+1)})/4, & andere; \end{cases}$$

wobei $G(R)_{ij}$ ein G-Pixelwert am R-Pixel in der i-ten Zeile und der j-ten Spalte im ersten Bild, $R_{ij}$ ein R-Pixel in der i-ten Zeile und der j-ten Spalte im ersten Bild, $E_{h-v}(R_{ij})$ ein Wert des horizontalen-vertikalen Kantenerkennungsergebnisses am $R_{ij}$ und $T_3$ ein dritter voreingestellter Schwellenwertparameter ist;

wobei die G-Pixelwerte am B-Pixel im ersten Bild gemäß dem Kantenerkennungsergebnis der Pixel durch die folgende Formel wiederhergestellt werden:

$$G(B)_{ij} = \begin{cases} (G(B)_{(i-1)j} + G(B)_{(i+1)j})/2, & E_{h-v}(B_{ij}) < T_4 \\ (G(B)_{i(j-1)} + G(B)_{i(j+1)})/2, & E_{h-v}(B_{ij}) > 1 - T_4 \\ (G(B)_{(i-1)j} + G(B)_{(i+1)j} + G(B)_{i(j-1)} + G(B)_{i(j+1)})/4, & andere; \end{cases}$$

wobei $G(B)_{ij}$ ein G-Pixelwert am B-Pixel in der i-ten Zeile und der j-ten Spalte im ersten Bild, $B_{ij}$ ein B-Pixel in der i-ten Zeile und der j-ten Spalte im ersten Bild, $E_{h-v}(B_{ij})$ ein Wert des horizontalen-vertikalen Kantenerkennungsergebnisses am $B_{ij}$ und $T_4$ ein vierter voreingestellter Schwellenwertparameter ist; und

wobei die G-Pixelwerte am IR-Pixel im ersten Bild gemäß dem Kantenerkennungsergebnis der Pixel durch die folgende Formel wiederhergestellt werden:

$$G(IR)_{ij} = \begin{cases} (G(IR)_{(i-1)j} + G(IR)_{(i+1)j})/2, & E_{h-v}(IR_{ij}) < T_5 \\ (G(IR)_{i(j-1)} + G(IR)_{i(j+1)})/2, & E_{h-v}(IR_{ij}) > 1 - T_5 \\ (G(IR)_{(i-1)j} + G(IR)_{(i+1)j} + G(IR)_{i(j-1)} + G_{(j+1)})/4, & andere; \end{cases}$$

wobei $G(IR)_{ij}$ ein G-Pixelwert am IR-Pixel in der i-ten Zeile und der j-ten Spalte im ersten Bild, $IR_{ij}$ ein IR-Pixel in der i-ten Zeile und der j-ten Spalte im ersten Bild, $E_{h-v}(IR_{ij})$ ein Wert des horizontalen-vertikalen Kantenerkennungsergebnisses am $B_{ij}$ und $T_5$ ein fünfter voreingestellter Schwellenwertparameter ist;

wobei das Wiederherstellen des B-Pixelwerts am R-Pixel im dritten Bild und des R-Pixelwerts am B-Pixel im dritten Bild gemäß dem Kantenerkennungsergebnis der Pixel Folgendes umfasst:

Wiederherstellen des B-Pixelwerts am R-Pixel im dritten Bild gemäß dem Kantenerkennungsergebnis der Pixel durch die folgende Formel:

$$R(B)_{ij} = \begin{cases} \dfrac{R(B)_{(i-2)j} + R(B)_{(i+2)j}}{2} + \dfrac{2G(B)_{ij} - G(B)_{(i-2)j} - G(B)_{(i+2)j}}{2}, & E_{h-v}(B_{ij}) < T_6 \\ \dfrac{R(B)_{i(j-2)} + R(B)_{i(j+2)}}{2} + \dfrac{2G(B)_{ij} - G(B)_{i(j-2)} - G(B)_{i(j+2)}}{2}, & E_{h-v}(B_{ij}) > 1 - T_6 \\ \dfrac{R(B)_{(i-2)j} + R(B)_{(i+2)j} + R(B)_{i(j-2)} + R(B)_{i(j+2)}}{4} + \dfrac{4G(B)_{ij} - G(B)_{(i-2)j} - G(B)_{(i+2)j} - G(B)_{i(j-2)} - G(B)_{i(j+2)}}{4}, & andere; \end{cases}$$

wobei $R(B)_{ij}$ ein R-Pixelwert am B-Pixel in der i-ten Zeile und der j-ten Spalte im dritten Bild, $G(B)_{ij}$ ein G-Pixelwert am IR-Pixel in der i-ten Zeile und der j-ten Spalte im ersten Bild, $B_{ij}$ ein B-Pixel in der i-ten Zeile und der j-ten Spalte im dritten Bild, $E_{h\text{-}v}(B_{ij})$ ein Wert des horizontalen-vertikalen Kantenerkennungsergebnisses am $B_{ij}$ und $T_6$ ein sechster voreingestellter Schwellenwertparameter ist; und

Wiederherstellen des R-Pixelwerts am B-Pixel im dritten Bild gemäß dem horizontalen Kantenerkennungsergebnis der Pixel durch die folgende Formel:

$$B(R)_{ij} = \begin{cases} \dfrac{B(R)_{(i-2)j} + B(R)_{(i+2)j}}{2} + \dfrac{2G(R)_{ij} - G(R)_{(i-2)j} - G(R)_{(i+2)j}}{2}, & E_{h\text{-}v}(R_{ij}) < T_7 \\[3mm] \dfrac{B(R)_{i(j-2)} + B(R)_{i(j+2)}}{2} + \dfrac{2G(R)_{ij} - G(R)_{i(j-2)} - G(R)_{i(j+2)}}{2}, & E_{h\text{-}v}(R_{ij}) > 1 - T_7 \\[3mm] \dfrac{B(R)_{(i-2)j} + B(R)_{(i+2)j} + B(R)_{i(j-2)} + B(R)_{i(j+2)}}{4} + \dfrac{4G(R)_{ij} - G(R)_{(i-2)j} - G(R)_{(i+2)j} - G(R)_{i(j-2)} - G(R)_{i(j+2)}}{4}, & andere; \end{cases}$$

wobei $B(R)_{ij}$ ein B-Pixelwert am R-Pixel in der i-ten Zeile und der j-ten Spalte im dritten Bild, $R_{ij}$ ein R-Pixel in der i-ten Zeile und der j-ten Spalte im dritten Bild, $E_{h\text{-}v}(R_{ij})$ ein Wert des horizontalen-vertikalen Kantenerkennungsergebnisses am $R_{ij}$ und $T_7$ ein siebter voreingestellter Schwellenwertparameter ist;

wobei das Wiederherstellen des R-Pixelwerts und des B-Pixelwerts am G-Pixel im dritten Bild Folgendes umfasst:

Wiederherstellen des R-Pixelwerts am G-Pixel im dritten Bild durch die folgende Formel in einem Fall, in dem das zu interpolierende G-Pixel in horizontaler Richtung an die R-Pixel und die B-Pixel angrenzt:

$$R(G)_{ij} = (R(G)_{i(j-1)} + R(G)_{i(j+1)}) / 2 + (2G_{j} - G_{i(j-1)} - G_{i(j+1)}) / 2,$$

wobei $R(G)_{ij}$ ein R-Pixelwert am G-Pixel in der i-ten Zeile und der j-ten Spalte im dritten Bild und $G_{ij}$ ein G-Pixelwert am G-Pixel in der i-ten Zeile und der j-ten Spalte im dritten Bild ist;

wobei in einem Fall, in dem das zu interpolierende G-Pixel in horizontaler Richtung an die R-Pixel und die B-Pixel angrenzt, der B-Pixelwert am G-Pixel im dritten Bild durch die folgende Formel wiederhergestellt wird:

$$B(G)_{ij} = (B(G)_{i(j-1)} + B(G)_{i(j+1)}) / 2 + (2G_{j} - G_{i(j-1)} - G_{i(j+1)}) / 2,$$

wobei $B(G)_{ij}$ ein B-Pixelwert am G-Pixel in der i-ten Zeile und der j-ten Spalte im dritten Bild ist;

wobei in einem Fall, in dem das zu interpolierende G-Pixel in vertikaler Richtung an die R-Pixel und die B-Pixel angrenzt, der R-Pixelwert am G-Pixel im dritten Bild durch die folgende Formel wiederhergestellt wird:

$$R(G)_{ij} = (R(G)_{(i-1)j} + R(G)_{(i+1)j}) / 2 + (2G_{j} - G_{(i-1)j} - G_{(i+1)j}) / 2,$$

wobei in einem Fall, in dem das zu interpolierende G-Pixel in horizontaler Richtung an die R-Pixel und die B-Pixel angrenzt, der B-Pixelwert am G-Pixel im dritten Bild durch die folgende Formel wiederhergestellt wird:

$$B(G)_{ij} = (B(G)_{(i-1)j} + B(G)_{(i+1)j}) / 2 + (2G_{j} - G_{(i-1)j} - G_{(i+1)j}) / 2;$$

wobei das Wiederherstellen des R-Pixelwerts und des B-Pixelwerts am IR-Pixel im dritten Bild gemäß dem Kantenerkennungsergebnis der Pixel Folgendes umfasst:

Wiederherstellen des R-Pixelwerts am IR-Pixel im dritten Bild gemäß dem Kantenerkennungsergebnis der Pixel durch die folgende Formel:

$$R(IR)_{ij} =$$

$$\begin{cases} (R(IR)_{(i-1)j} + R(IR)_{(i+1)j})/2 + (2G(IR)_{ij} - G(IR)_{(i-1)j} - G(IR)_{(i+1)j})/2, & E_{h-v}(IR_{ij}) < T_8 \\ (R(IR)_{i(j-1)} + R(IR)_{i(j+1)})/2 + (2G(IR)_{ij} - G(IR)_{i(j-1)} - G(IR)_{i(j+1)})/2, & E_{h-v}(IR_{ij}) > 1 - T_8 \\ \dfrac{R(IR)_{(i-1)j} + R(IR)_{(i+1)j} + R(IR)_{i(j-1)} + R(IR)_{i(j+1)}}{4} + \dfrac{4G(IR)_{ij} - G(IR)_{(i-1)j} - G(IR)_{(i+1)j} - G(IR)_{i(j-1)} - G_{i(j+1)}}{4}, & andere; \end{cases}$$

wobei $R(IR)_{ij}$ ein R-Pixelwert am IR-Pixel in der i-ten Zeile und der j-ten Spalte im dritten Bild, $G(IR)_{ij}$ ein G-Pixelwert am IR-Pixel in der i-ten Zeile und der j-ten Spalte im dritten Bild, $R_{ij}$ ein R-Pixel in der i-ten Zeile und der j-ten Spalte im dritten Bild, $E_{h-v}(R_{ij})$ ein Wert des horizontalen-vertikalen Kantenerkennungsergebnisses am $R_{ij}$ und $T_8$ ein achter voreingestellter Schwellenwertparameter ist; und

wobei der B-Pixelwert am IR-Pixel im dritten Bild gemäß dem Kantenerkennungsergebnis der Pixel durch die folgende Formel wiederhergestellt wird:

$$B(IR)_{ij} =$$

$$\begin{cases} (B(IR)_{(i-1)j} + B(IR)_{(i+1)j})/2 + (2G(IR)_{ij} - G(IR)_{(i-1)j} - G(IR)_{(i+1)j})/2, & E_{h-v}(IR_{ij}) < T_8 \\ (B(IR)_{i(j-1)} + B(IR)_{i(j+1)})/2 + (2G(IR)_{ij} - G(IR)_{i(j-1)} - G(IR)_{i(j+1)})/2, & E_{h-v}(IR_{ij}) > 1 - T_8 \\ \dfrac{B(IR)_{(i-1)j} + B(IR)_{(i+1)j} + B(IR)_{i(j-1)} + B(IR)_{i(j+1)}}{4} + \dfrac{4G(IR)_{ij} - G(IR)_{(i-1)j} - G(IR)_{(i+1)j} - G(IR)_{i(j-1)} - G_{i(j+1)}}{4}, & andere; \end{cases}$$

wobei $B(IR)_{ij}$ ein B-Pixelwert am IR-Pixel in der i-ten Zeile und der j-ten Spalte im dritten Bild ist.

2. Computerimplementiertes Verfahren nach Anspruch 1, wobei das Durchführen der Kantenerkennung des ersten Bilds (S510) unter Verwendung aller R-, G-, B- und IR-Komponenten des ersten Bildes, um das Kantenerkennungsergebnis der Pixel im ersten Bild zu erhalten, Folgendes umfasst:

Verarbeiten des ersten Bildes unter Verwendung vordefinierter Kantenerkennungsoperatoren in horizontaler, vertikaler, diagonaler und rückdiagonaler Richtung, um Änderungsraten der Pixel im ersten Bild in horizontaler, vertikaler, diagonaler und rückdiagonaler Richtung zu erhalten (S511); und
Erhalten des Kantenerkennungsergebnisses der Pixel gemäß den Änderungsraten der Pixel in horizontaler, vertikaler, diagonaler und rückdiagonaler Richtung (S512).

3. Computerimplementiertes Verfahren nach Anspruch 2, wobei das Erhalten des Kantenerkennungsergebnisses der Pixel gemäß den Änderungsraten der Pixel in horizontaler, vertikaler, diagonaler und rückdiagonaler Richtung (S512) Folgendes umfasst:

Berechnen der Kantenerkennungsergebnisse der Pixel in horizontaler, vertikaler, diagonaler und rückdiagonaler Richtung gemäß den Änderungsraten der Pixel in horizontaler, vertikaler, diagonaler und rückdiagonaler Richtung; und
Durchführen einer Glättungsfilterung der berechneten Kantenerkennungsergebnisse, um das Kantenerkennungsergebnis der Pixel zu erhalten.

4. Computerimplementiertes Verfahren nach den Ansprüchen 1 bis 3, umfassend ferner das Durchführen einer Falschfarbenentfernungsverarbeitung des fünften Bilds (S560), wobei das Durchführen der Falschfarbenentfernungsverarbeitung des fünften Bilds Folgendes umfasst:

☐mwandeln des fünften Bildes in einen Farbraum, in dem Helligkeit und Chroma getrennt sind;
Analysieren einer Chroma-Komponente, um einen Zielverarbeitungsbereich zu bestimmen;
Dämpfen der Chroma-Komponente des Zielverarbeitungsbereichs; und

Durchführen einer Gamut-Konvertierung zwischen einer Helligkeitskomponente und einer gedämpften Chroma-Komponente, um nach der Falschfarbenentfernungsverarbeitung ein RGB-Bild zu erhalten.

5. Elektronisches Gerät (10) mit einem Prozessor (13) und einem nichtflüchtigen Speicher (11), in dem mehrere Computerbefehle gespeichert sind, wobei das elektronische Gerät so konfiguriert ist, dass es, wenn die mehreren Computerbefehle vom Prozessor ausgeführt werden, das Bildverarbeitungsverfahren nach einem der Ansprüche 1 bis 4 ausführt.

6. Lesbares Speichermedium (11), umfassend ein Computerprogramm, wobei
das Computerprogramm so konfiguriert ist, dass es, wenn das Computerprogramm ausgeführt wird, ein elektronisches Gerät (10), in dem sich das lesbare Speichermedium befindet, so steuert, dass es das Bildverarbeitungsverfahren nach einem der Ansprüche 1 bis 4 ausführt.


**Revendications**

1. Procédé de traitement d'image mis en œuvre par ordinateur pour traiter une première image collectée par un capteur d'image RGB-IR, dans lequel le capteur d'image RGB-IR comprend un réseau de pixels 4 X 4, une distribution spectrale d'une unité IR de capteur d'image RGB-IR dans une bande infrarouge est similaire à une distribution spectrale d'une unité de capteur d'image RGB-IR dans une bande infrarouge, **caractérisé en ce que**, le procédé comprend :

réaliser une détection de contour sur la première image (S510) en utilisant tous les composants R, G, B, IR de la première image pour obtenir un résultat de détection de contour de pixels dans la première image, dans lequel le résultat de détection de contour de pixels dans la première image comprend un résultat de détection de contour diagonal-diagonal arrière des pixels et un résultat de détection de contour horizontal-vertical des pixels ;
obtenir une deuxième image en fonction de la première image et du résultat de détection de contour des pixels (S520), dans lequel la deuxième image est une image à composant IR comprenant les valeurs pixels IR complètes correspondant à la première image et dotée de la même taille que la première image ;
soustraire la deuxième image de la première image (S530) pour obtenir une troisième image d'imagerie par lumière visible ;
obtenir une quatrième image d'un composant G en fonction de la troisième image et du résultat de détection de contour des pixels (S540) ; et
obtenir une cinquième image comprenant les composants R, G, et B en fonction de la troisième image, de la quatrième image, et du résultat de détection de contour des pixels (S550) ;
dans lequel obtenir une cinquième image comprenant les composants R, G, et B en fonction de la troisième image, de la quatrième image, et du résultat de détection de contour des pixels comprend :

transférer la valeur pixel G de chaque pixel de la quatrième image à une position correspondante sur une image de même taille que la quatrième image (S551) ;
transférer la valeur pixel R et la valeur pixel B de chaque pixel de la troisième image à une position correspondante sur une image de même taille que la quatrième image (S552) ;
restaurer une valeur pixel B à un pixel R dans la troisième image et une valeur pixel R à un pixel B dans la troisième image (S553) en fonction du résultat de détection de contour des pixels, et transférer chaque valeur pixel B restaurée et la valeur pixel R restaurée à des positions correspondantes sur l'image de même taille que la quatrième image ;
restaurer une valeur pixel R et une valeur pixel B à un pixel G dans la troisième image (S554), et transférer la valeur pixel R restaurée et la valeur pixel B restaurée à une position correspondante sur l'image de même taille que la quatrième image ; et
restaurer une valeur pixel R et une valeur pixel B à un pixel IR dans la troisième image en fonction du résultat de détection de contour des pixels (S555), et transférer chaque valeur pixel R restaurée et la valeur pixel B restaurée à des positions correspondantes sur l'image de même taille que la quatrième image pour obtenir la cinquième image sur l'image de même taille que la quatrième image, dans lequel la cinquième image comprend les composants R, G, et B complets ;
dans lequel obtenir la deuxième image en fonction de la première image et du résultat de détection de contour des pixels comprend :

transférer la valeur pixel IR d'un pixel IR de la première image à une position correspondante sur une image de même taille que la première image (S521) ;

restaurer la valeur pixel IR à un pixel G sur la première image en fonction des pixels IR adjacents aux pixels G sur la première image, et transférer les valeurs pixels IR restaurées au pixel G à une position correspondante sur l'image de même taille que la première image (S522) ; et

restaurer les valeurs pixels IR à un pixel R et un pixel B sur la première image en fonction du résultat de détection de contour des pixels et des pixels IR respectivement adjacents au pixel R et au pixel B sur la première image, et transférer les valeurs pixels IR restaurées au pixel R et au pixel B à des positions correspondantes sur l'image de même taille que la première image pour obtenir la deuxième image sur l'image de même taille que la première image (S523) ;

dans lequel restaurer les valeurs pixels IR à un pixel R et un pixel B sur la première image en fonction du résultat de détection de contour des pixels et des pixels IR respectivement adjacents au pixel R et au pixel B sur la première image comprend :

restaurer les valeurs pixels IR au pixel B sur la première image en fonction du résultat de détection de contour des pixels via la formule suivante :

$$
IR(B)_{ij} = \begin{cases} (IR(B)_{(i-1)(j-1)} + IR(B)_{(i+1)(j+1)}) / 2, & E_{d-bd}(B_{ij}) < T_1 \\ (IR(B)_{(i-1)(j+1)} + IR(B)_{(i+1)(j-1)}) / 2, & E_{d-bd}(B_{ij}) > 1 - T_1 \\ (IR(B)_{(i-1)(j-1)} + IR(B)_{(i+1)(j+1)} + IR(B)_{(i-1)(j+1)} + IR(B)_{(i+1)(j-1)}) / 4, & autres; \end{cases}
$$

dans laquelle $IR(B)_{ij}$ est une valeur pixel IR au pixel B dans la i-ième rangée et la j-ième colonne sur la première image, $B_{ij}$ est un pixel B dans la i-ième rangée et la j-ième colonne sur la première image, $E_{d-bd}(B_{ij})$ est une valeur du résultat de détection de contour de diagonale au $B_{ij}$, $T_1$ est un premier paramètre seuil prédéfini ; et

restaurer les valeurs pixels IR au pixel R sur la première image en fonction du résultat de détection de contour de pixels via la formule suivante :

$$
IR(R)_{ij} = \begin{cases} (IR(R)_{(i-1)(j-1)} + IR(R)_{(i+1)(j+1)}) / 2, & E_{d-bd}(R_{ij}) < T_2 \\ (IR(R)_{(i-1)(j+1)} + IR(R)_{(i+1)(j-1)}) / 2, & E_{d-bd}(R_{ij}) > 1 - T_2 \\ (IR(R)_{(i-1)(j-1)} + IR(R)_{(i+1)(j+1)} + IR(R)_{(i-1)(j+1)} + IR(R)_{(i+1)(j-1)}) / 4, & autres; \end{cases}
$$

dans laquelle $IR(R)_{ij}$ est une valeur pixel IR au pixel R pixel dans la i-ième rangée et la j-ième colonne sur la première image, $R_{ij}$ est un pixel R dans la i-ième rangée et la j-ième colonne sur la première image, $E_{d-bd}(R_{ij})$ est une valeur du résultat de détection de contour de diagonale au $R_{ij}$, $T_2$ est un deuxième paramètre seuil prédéfini ;

dans lequel obtenir une quatrième image d'un composant G en fonction de la troisième image et du résultat de détection de contour des pixels comprend :

transférer une valeur pixel G d'un pixel G sur la troisième image à une position correspondante sur une image de même taille que la troisième image (S541) ; et

restaurer les valeurs pixels G à un pixel R, un pixel B, et un pixel IR sur la première image en fonction du résultat de détection de contour de pixels, et transférer les valeurs pixels G restaurées au pixel R, au pixel B, et au pixel IR à des positions correspondantes sur l'image de même taille que la troisième image pour obtenir la quatrième image sur l'image de même taille que la troisième image, dans lequel la quatrième image comprend les valeurs pixels G complètes (S542) ;

dans lequel restaurer les valeurs pixels G à un pixel R, un pixel B, et un pixel IR sur la première image en fonction du résultat de détection de contour de pixels comprend :

restaurer les valeurs pixels G au pixel R sur la première image en fonction du résultat de détection de contour de pixels via la formule suivante :

$$G(R)_{ij} = \begin{cases} (G(R)_{(i-1)j} + G(R)_{(i+1)j})/2, & E_{h-v}(R_{ij}) < T_3 \\ (G(R)_{i(j-1)} + G(R)_{i(j+1)})/2, & E_{h-v}(R_{ij}) > 1-T_3 \\ (G(R)_{(i-1)j} + G(R)_{(i+1)j} + G(R)_{i(j-1)} + G(R)_{i(j+1)})/4, & \textit{autres;} \end{cases}$$

dans laquelle $G(R)_{ij}$ est une valeur pixel G au pixel R dans la i-ième rangée et la j-ième colonne sur la première image, $R_{ij}$ est un pixel R dans la i-ième rangée et la j-ième colonne sur la première image, $E_{h-v}(R_{ij})$ est une valeur du résultat de détection de contour horizontal-vertical au $R_{ij}$, $T_3$ est un troisième paramètre seuil prédéfini ;

les valeurs pixels G au pixel B sur la première image sont restaurées en fonction du résultat de détection de contour des pixels via la formule suivante :

$$G(B)_{ij} = \begin{cases} (G(B)_{(i-1)j} + G(B)_{(i+1)j})/2, & E_{h-v}(B_{ij}) < T_4 \\ (G(B)_{i(j-1)} + G(B)_{i(j+1)})/2, & E_{h-v}(B_{ij}) > 1-T_4 \\ (G(B)_{(i-1)j} + G(B)_{(i+1)j} + G(B)_{i(j-1)} + G(B)_{i(j+1)})/4, & \textit{autres;} \end{cases}$$

dans laquelle $G(B)_{ij}$ est une valeur pixel G au pixel B dans la i-ième rangée et la j-ième colonne sur la première image, $B_{ij}$ est un pixel B dans la i-ième rangée et la j-ième colonne sur la première image, $E_{h-v}(B_{ij})$ est une valeur du résultat de détection de contour horizontal-vertical au $B_{ij}$, $T_4$ est un quatrième paramètre seuil prédéfini ; et

la valeur pixel G au pixel IR sur la première image est restaurée en fonction du résultat de détection de contour de pixels via la formule suivante :

$$G(IR)_{ij} = \begin{cases} (G(IR)_{(i-1)j} + G(IR)_{(i+1)j})/2, & E_{h-v}(IR_{ij}) < T_5 \\ (G(IR)_{i(j-1)} + G(IR)_{i(j+1)})/2, & E_{h-v}(IR_{ij}) > 1-T_5 \\ (G(IR)_{(i-1)j} + G(IR)_{(i+1)j} + G(IR)_{i(j-1)} + G_{(j+1)})/4, & \textit{autres;} \end{cases}$$

dans laquelle $G(IR)_{ij}$ est une valeur pixel G au pixel IR dans la i-ième rangée et la j-ième colonne sur la première image, $IR_{ij}$ est un pixel IR dans la i-ième rangée et la j-ième colonne sur la première image, $E_{h-v}(IR_{ij})$ est une valeur du résultat de détection de contour horizontal-vertical au $B_{ij}$, $T_5$ est un cinquième paramètre seuil prédéfini ;

dans lequel restaurer la valeur pixel B à un pixel R dans la troisième image et une valeur pixel R au pixel B dans la troisième image en fonction du résultat de détection de contour des pixels comprend :

restaurer la valeur pixel B au pixel R dans la troisième image en fonction du résultat de détection de contour de pixels via la formule suivante :

$$R(B)_{ij} =$$

$$\begin{cases} \dfrac{R(B)_{(i-2)j} + R(B)_{(i+2)j}}{2} + \dfrac{2G(B)_{ij} - G(B)_{(i-2)j} - G(B)_{(i+2)j}}{2}, & E_{h-v}(B_{ij}) < T_6 \\ \dfrac{R(B)_{i(j-2)} + R(B)_{i(j+2)}}{2} + \dfrac{2G(B)_{ij} - G(B)_{i(j-2)} - G(B)_{i(j+2)}}{2}, & E_{h-v}(B_{ij}) > 1-T_6 \\ \dfrac{R(B)_{(i-2)j} + R(B)_{(i+2)j} + R(B)_{i(j-2)} + R(B)_{i(j+2)}}{4} + \dfrac{4G(B)_{ij} - G(B)_{(i-2)j} - G(B)_{(i+2)j} - G(B)_{i(j-2)} - G(B)_{i(j+2)}}{4}, & \textit{autres;} \end{cases}$$

dans laquelle $R(B)_{ij}$ est une valeur pixel R au pixel B dans la i-ième rangée et la j-ième colonne sur la troisième image, $G(B)_{ij}$ est une valeur pixel G au pixel IR dans la i-ième rangée et la j-ième colonne sur la première image, $B_{ij}$ est un pixel B dans la i-ième rangée et la j-ième colonne sur la troisième image, $E_{h-v}(B_{ij})$ est une valeur du résultat de détection de contour horizontal-vertical au $B_{ij}$, $T_6$ est un sixième paramètre seuil prédéfini ; et

restaurer la valeur pixel R au pixel B dans la troisième image en fonction du résultat de détection de contour horizontal via la formule suivante :

$$B(R)_{ij} =$$

$$\begin{cases} \dfrac{B(R)_{(i-2)j} + B(R)_{(i+2)j}}{2} + \dfrac{2G(R)_{ij} - G(R)_{(i-2)j} - G(R)_{(i+2)j}}{2} & , \ E_{h\text{-}v}(R_{ij}) < T_7 \\[2ex] \dfrac{B(R)_{i(j-2)} + B(R)_{i(j+2)}}{2} + \dfrac{2G(R)_{ij} - G(R)_{i(j-2)} - G(R)_{i(j+2)}}{2} & , \ E_{h\text{-}v}(R_{ij}) > 1 - T_7 \\[2ex] \dfrac{B(R)_{(i-2)j} + B(R)_{(i+2)j} + B(R)_{i(j-2)} + B(R)_{i(j+2)}}{4} + \dfrac{4G(R)_{ij} - G(R)_{(i-2)j} - G(R)_{(i+2)j} - G(R)_{i(j-2)} - G(R)_{i(j+2)}}{4} & , \ autres; \end{cases}$$

dans laquelle $B(R)_{ij}$ est une valeur pixel B au pixel R dans la i-ième rangée et la j-ième colonne sur la troisième image, $R_{ij}$ est une valeur pixel R dans la i-ième rangée et la j-ième colonne sur la troisième image, $E_{h\text{-}v}(R_{ij})$ est une valeur du résultat de détection de contour horizontal-vertical au $R_{ij}$, $T_7$ est un septième paramètre seuil prédéfini ;
dans lequel restaurer la valeur pixel R et la valeur pixel B au pixel G dans la troisième image comprend :

dans un cas où le pixel G à interpoler est adjacent aux pixels R et aux pixels B dans le sens horizontal, restaurer la valeur pixel R au pixel G dans la troisième image via la formule suivante :

$$R(G)_{ij} = (R(G)_{i(j-1)} + R(G)_{i(j+1)}) / 2 + (2G_{ij} - G_{(j-1)} - G_{(j+1)}) / 2,$$

dans laquelle $R(G)_{ij}$ est une valeur pixel R au pixel G dans la i-ième rangée et la j-ième colonne sur la troisième image, $G_{ij}$ est une valeur pixel G au pixel G dans la i-ième rangée et la j-ième colonne sur la troisième image;
dans un cas où le pixel G à interpoler est adjacent aux pixels R et aux pixels B dans le sens horizontal, la valeur pixel B au pixel G dans la troisième image est restaurée via la formule suivante :

$$B(G)_{ij} = (B(G)_{i(j-1)} + B(G)_{i(j+1)}) / 2 + (2G_{ij} - G_{(j-1)} - G_{(j+1)}) / 2,$$

dans laquelle $B(G)_{ij}$ est une valeur pixel B au pixel G dans la i-ième rangée et la j-ième colonne sur la troisième image ;
dans un cas où le pixel G à interpoler est adjacent aux pixels R et aux pixels B dans le sens vertical, la valeur pixel R au pixel G dans la troisième image est restaurée via la formule suivante :

$$R(G)_{ij} = (R(G)_{(i-1)j} + R(G)_{(i+1)j}) / 2 + (2G_{ij} - G_{(i-1)j} - G_{(i+1)j}) / 2,$$

dans un cas où le pixel G à interpoler est adjacent aux pixels R et aux pixels B dans le sens horizontal, la valeur pixel B au pixel G dans la troisième image est restaurée via la formule suivante :

$$B(G)_{ij} = (B(G)_{(i-1)j} + B(G)_{(i+1)j}) / 2 + (2G_{ij} - G_{(i-1)j} - G_{(i+1)j}) / 2;$$

dans laquelle restaurer la valeur pixel R et la valeur pixel B au pixel IR dans la troisième image en fonction du résultat de détection de contour des pixels comprend :

restaurer la valeur pixel R au pixel IR dans la troisième image en fonction du résultat de détection de contour des pixels via la formule suivante :

$$R(IR)_{ij} =$$

$$\begin{cases} (R(IR)_{(i-1)j} + R(IR)_{(i+1)j})/2 + (2G(IR)_{ij} - G(IR)_{(i-1)j} - G(IR)_{(i+1)j})/2, & E_{h-v}(IR_{ij}) < T_8 \\ (R(IR)_{i(j-1)} + R(IR)_{i(j+1)})/2 + (2G(IR)_{ij} - G(IR)_{i(j-1)} - G(IR)_{i(j+1)})/2, & E_{h-v}(IR_{ij}) > 1 - T_8 \\ \dfrac{R(IR)_{(i-1)j} + R(IR)_{(i+1)j} + R(IR)_{i(j-1)} + R(IR)_{i(j+1)}}{4} + \dfrac{4G(IR)_{ij} - G(IR)_{(i-1)j} - G(IR)_{(i+1)j} - G(IR)_{i(j-1)} - G}{4}, & autres; \end{cases}$$

dans laquelle $R(IR)_{ij}$ est une valeur pixel R au pixel IR dans la i-ième rangée et la j-ième colonne sur la troisième image, $G(IR)_{ij}$ est une valeur pixel G au pixel IR dans la i-ième rangée et la j-ième colonne sur la troisième image, $R_{ij}$ est un pixel R dans la i-ième rangée et la j-ième colonne sur la troisième image, $E_{h-v}(R_{ij})$ est une valeur du résultat de détection de contour horizontal-vertical au $R_{ij}$, $T_8$ est un huitième paramètre seuil prédéfini ; et

dans lequel la valeur pixel B au pixel IR dans la troisième image est restaurée en fonction du résultat de détection de contour des pixels via la formule suivante :

$$B(IR)_{ij} =$$

$$\begin{cases} (B(IR)_{(i-1)j} + B(IR)_{(i+1)j})/2 + (2G(IR)_{ij} - G(IR)_{(i-1)j} - G(IR)_{(i+1)j})/2, & E_{h-v}(IR_{ij}) < T_8 \\ (B(IR)_{i(j-1)} + B(IR)_{i(j+1)})/2 + (2G(IR)_{ij} - G(IR)_{i(j-1)} - G(IR)_{i(j+1)})/2, & E_{h-v}(IR_{ij}) > 1 - T_8 \\ \dfrac{B(IR)_{(i-1)j} + B(IR)_{(i+1)j} + B(IR)_{i(j-1)} + B(IR)_{i(j+1)}}{4} + \dfrac{4G(IR)_{ij} - G(IR)_{(i-1)j} - G(IR)_{(i+1)j} - G(IR)_{i(j-1)} - G}{4}, & autres; \end{cases}$$

dans laquelle $B(IR)_{ij}$ est une valeur pixel B au pixel IR dans la i-ième rangée et la j-ième colonne sur la troisième image.

2. Procédé mis en œuvre par ordinateur selon la revendication 1, dans lequel réaliser une détection de contour sur la première image (S510) en utilisant tous les composants R, G, B, IR de la première image pour obtenir un résultat de détection de contour de pixels dans la première image comprend :

    traiter la première image en utilisant des opérateurs de détection de contour prédéfinis dans les sens horizontal, vertical, diagonal, et diagonal arrière pour obtenir des taux de changement des pixels dans la première image dans les sens horizontal, vertical, diagonal, et diagonal arrière (S511) ; et

    obtenir les résultats de détection de contour des pixels en fonction des taux de changement des pixels dans la première image dans les sens horizontal, vertical, diagonal, et diagonal arrière (S512).

3. Procédé mis en œuvre par ordinateur selon la revendication 2, dans lequel obtenir les résultats de détection de contour des pixels en fonction des taux de changement des pixels dans la première image dans les sens horizontal, vertical, diagonal, et diagonal arrière (S512) comprend :

    calculer les résultats de détection de contour des pixels dans les sens horizontal, vertical, diagonal, et diagonal arrière en fonction des taux de changement des pixels dans la première image dans les sens horizontal, vertical, diagonal, et diagonal arrière ; et

    réaliser un traitement de filtrage lisse sur les résultats de détection de contour calculés pour obtenir les résultats de détection de contour des pixels.

4. Procédé mis en œuvre par ordinateur selon les revendications 1 à 3, comprenant en outre réaliser un traitement de suppression des fausses couleurs sur la cinquième image (S560), dans lequel le traitement de suppression des fausses couleurs sur la cinquième image comprend :

    convertir la cinquième image en un espace couleur dans lequel la luminosité et le chroma sont séparés ;

    analyser un composant de chroma pour déterminer une zone de traitement cible ;

    atténuer le composant de chroma de la zone de traitement cible ; et

    réaliser une conversion de gamme entre un composant de luminosité et un composant de chroma atténué pour obtenir une image RGB après le traitement de suppression de fausse couleur.

5. Dispositif électronique (10), comprenant un processeur (13) et une mémoire non-volatile (11) stockant une pluralité d'instructions pour ordinateur, dans lequel le dispositif électronique est configuré pour, lorsque la pluralité d'instructions pour ordinateur est exécutée par le processeur, réaliser le procédé de traitement d'image selon l'une quelconque des revendications 1 à 4.

6. Support de stockage lisible (11), comprenant un programme informatique, dans lequel le programme informatique est configuré pour, lorsque le programme informatique est en marche, commander à un dispositif électronique (10) où le support de stockage lisible est situé de réaliser le procédé de traitement d'image selon l'une quelconque des revendications 1 à 4.

FIG. 1

FIG. 2

FIG. 3

10

Image processing apparatus — 20

Memory — 11

Storage controller — 12

Processor — 13

FIG. 4

Perform edge detection on the first image to obtain an edge detection result of pixels in the first image — S510

Obtain a second image according to the first image and the edge detection result of the pixels, where the second image is an IR component image corresponding to the first image — S520

Subtract the second image from the first image to obtain a third image of visible light imaging — S530

Obtain a fourth image of a G component according to the third image and the edge detection result of the pixels — S540

Obtain a fifth image including R, G, and B components according to the third image, the fourth image, and the edge detection result of the pixels — S550

FIG. 5

Process the first image by using predefined edge detection operators in horizontal, vertical, diagonal, and back-diagonal directions to obtain change rates of the pixels in the first image in the horizontal, vertical, diagonal, and back-diagonal directions — S511

Obtain the edge detection result of the pixels according to the change rates of the pixels in the horizontal, vertical, diagonal, and back-diagonal directions — S512

FIG. 6

Transfer an IR pixel value of an IR pixel in the first image to a corresponding position in an image of the same size as the first image — S521

Restore an IR pixel value at a G pixel in the first image, and transfer the restored IR pixel value at the G pixel to a corresponding position in the image of the same size as the first image — S522

Restore IR pixel values at an R pixel and a B pixel in the first image according to the edge detection result of the pixels, and transfer the restored IR pixel values at the R pixel and the B pixel to corresponding positions in the image of the same size as the first image to obtain the second image including complete IR pixel values in the image of the same size as the first image, where the second image includes complete IR pixel values — S523

FIG. 7

| B₁₁ | G₁₂ | R₁₃ | G₁₄ | B₁₅ | G₁₆ |
|-----|-----|-----|-----|-----|-----|
| $B_{11}$ | $G_{12}$ | $R_{13}$ | $G_{14}$ | $B_{15}$ | $G_{16}$ |
| $G_{21}$ | $IR_{22}$ | $G_{23}$ | $IR_{24}$ | $G_{25}$ | $IR_{26}$ |
| $R_{31}$ | $G_{32}$ | $B_{33}$ | $G_{34}$ | $R_{35}$ | $G_{36}$ |
| $G_{41}$ | $IR_{42}$ | $G_{43}$ | $IR_{44}$ | $G_{45}$ | $IR_{46}$ |
| $B_{51}$ | $G_{52}$ | $R_{53}$ | $G_{54}$ | $B_{55}$ | $G_{56}$ |
| $G_{61}$ | $IR_{62}$ | $G_{63}$ | $IR_{64}$ | $G_{65}$ | $IR_{66}$ |

FIG. 8

|  |  |  |  |  |  |
|---|---|---|---|---|---|
|  | $IR_{22}$ |  | $IR_{24}$ |  | $IR_{26}$ |
|  |  |  |  |  |  |
|  | $IR_{42}$ |  | $IR_{44}$ |  | $IR_{46}$ |
|  |  |  |  |  |  |
|  | $IR_{62}$ |  | $IR_{64}$ |  | $IR_{66}$ |

FIG. 9A

|  |  |  |  |  |  |
|---|---|---|---|---|---|
|  | $IR_{12}$ |  | $IR_{14}$ |  | $IR_{16}$ |
| $IR_{21}$ | $IR_{22}$ | $IR_{23}$ | $IR_{24}$ | $IR_{25}$ | $IR_{26}$ |
|  | $IR_{32}$ |  | $IR_{34}$ |  | $IR_{36}$ |
| $IR_{41}$ | $IR_{42}$ | $IR_{43}$ | $IR_{44}$ | $IR_{45}$ | $IR_{46}$ |
|  | $IR_{52}$ |  | $IR_{54}$ |  | $IR_{56}$ |
| $IR_{61}$ | $IR_{62}$ | $IR_{63}$ | $IR_{64}$ | $IR_{65}$ | $IR_{66}$ |

FIG. 9B

| IR₁₁ | IR₁₂ | IR₁₃ | IR₁₄ | IR₁₅ | IR₁₆ |
|---|---|---|---|---|---|
| IR₂₁ | IR₂₂ | IR₂₃ | IR₂₄ | IR₂₅ | IR₂₆ |
| IR₃₁ | IR₃₂ | IR₃₃ | IR₃₄ | IR₃₅ | IR₃₆ |
| IR₄₁ | IR₄₂ | IR₄₃ | IR₄₄ | IR₄₅ | IR₄₆ |
| IR₅₁ | IR₅₂ | IR₅₃ | IR₅₄ | IR₅₅ | IR₅₆ |
| IR₆₁ | IR₆₂ | IR₆₃ | IR₆₄ | IR₆₅ | IR₆₆ |

FIG. 9C

Transfer a G pixel value of a G pixel in the third image to a corresponding position in an image of the same size as the third image ⟶ S541

Restore G pixel values at an R pixel, a B pixel, and an IR pixel in the first image according to the edge detection result of the pixels, and transfer the restored G pixel values at the R pixel, the B pixel, and the IR pixel to corresponding positions in the image of the same size as the third image to obtain the fourth image in the image of the same size as the third image, where the fourth image includes complete G pixel values ⟶ S542

FIG. 10

Transfer a G pixel value of each pixel in the fourth image to a corresponding position in an image of the same size as the fourth image  —S551

Transfer an R pixel value and a B pixel value of each pixel in the third image to a corresponding position in the image of the same size as the fourth image  —S552

Restore a B pixel value corresponding to an R pixel in the third image and an R pixel value corresponding to a B pixel in the third image according to the edge detection result of the pixels, and transfer the restored B pixel value and R pixel value to corresponding positions in the image of the same size as the fourth image  —S553

Restore an R pixel value and a B pixel value of a G pixel in the third image, and transfer restored R pixel value and restored B pixel value to a corresponding position in the image of the same size as the fourth image  —S554

According to the edge detection result of each pixel, restore an R pixel value and a B pixel value of an IR pixel in the third image, and transfer restored R pixel value and restored B pixel value to a corresponding position in the image of the same size as the fourth image to obtain the fifth image in the image of the same size as the fourth image, where the fifth image includes complete R, G, and B components  —S555

FIG. 11

Process the first image by using predefined edge detection operators in horizontal, vertical, diagonal, and back-diagonal directions to obtain change rates of pixels in the first image in the horizontal, vertical, diagonal, and back-diagonal directions ⟋⎯ S510

Obtain a second image according to the first image and the edge detection result of the pixels, where the second image is an IR component image corresponding to the first image ⟋⎯ S520

Subtract the second image from the first image to obtain a third image of visible light imaging ⟋⎯ S530

Obtain a fourth image of a G component according to the third image and the edge detection result of the pixels ⟋⎯ S540

Obtain a fifth image including R, G, and B components according to the third image, the fourth image, and the edge detection result of the pixels ⟋⎯ S550

Perform false-color removal processing on the fifth image ⟋⎯ S560

FIG. 12

20

Image processing apparatus

21

Edge detection module

22

IR component image obtaining module

23

Visible light imaging image obtaining module

24

G component image obtaining module

25

RGB image obtaining module

FIG. 13

20

Image processing apparatus

21

Edge detection module

22

IR component image obtaining module

23

Visible light imaging image obtaining module

24

G component image obtaining module

25

RGB image obtaining module

26

False-color removal processing module

FIG. 14

## REFERENCES CITED IN THE DESCRIPTION

**Patent documents cited in the description**

- EP 1992987 A1
- US 2007153335 A1
- US 2016255290 A1
- US 2017374299 A1